# EUROPÄISCHE PATENTSCHRIFT

(11) **EP 2 836 447 B1**
(45) Veröffentlichungstag und Bekanntmachung des Hinweises auf die Patenterteilung: **28.06.2017**
(21) Anmeldenummer: 12715687.5
(22) Anmeldetag: 12.04.2012
(51) Int. Cl.: B65G 47/08, B65G 47/29, B65G 47/84, B65B 23/14, B65G 47/31

(54) **VORRICHTUNG UND VERFAHREN ZUM FÖRDERN VON STÜCKIGEN PRODUKTEN**
DEVICE AND METHOD FOR CONVEYING LUMPY PRODUCTS
DISPOSITIF ET PROCÉDÉ DE TRANSPORT DE PRODUITS EN MORCEAUX

(43) Veröffentlichungstag der Anmeldung: 18.02.2015
(73) Patentinhaber: Loesch Verpackungstechnik GmbH, 96146 Altendorf (DE)
(72) Erfinder: HAMMACHER, Heinz-Peter, 96049 Bamberg (DE)
(74) Vertreter: Prüfer & Partner mbB Patentanwälte · Rechtsanwälte
(86) Internationale Anmeldenummer: PCT/EP2012/056702
(87) Internationale Veröffentlichungsnummer: WO 2013/152798

(56) Entgegenhaltungen:
- EP-A1- 0 644 119
- EP-A1- 1 300 351
- EP-A1- 1 514 815
- EP-A1- 2 361 858
- WO-A1-2006/024460
- WO-A1-2010/037959
- DE-A1- 2 143 910
- DE-A1-102011 075 178
- US-A- 5 020 655
- US-B1- 6 182 814

## Beschreibung

Die Erfindung betrifft eine Vorrichtung und ein Verfahren zum Fördern von stückigen Produkten derart, dass die Produkte aus einem Produktstrom vereinzelt und anschließend gleichmäßig beabstandet und/oder in Gruppen weiter gefördert werden. Die Erfindung betrifft außerdem eine Vorrichtung und ein Verfahren zum Fördern von stückigen Produkten auf mehreren nebeneinander und im wesentlichen parallel zueinander angeordneten Bahnen, wobei die Produkte auf jeder der Bahnen aus einem Produktstrom vereinzelt und anschließend gleichmäßig beabstandet und/oder in Gruppen weiter gefördert werden.

Die Erfindung betrifft eine Vorrichtung und ein Verfahren zum Fördern von stückigen Produkten, wobei diese Vorrichtung und dieses Verfahren beispielsweise in Verbindung mit einer Verpackungsmaschine zum Einsatz kommen können, mittels der die stückigen Produkte verpackt werden. Bei den zu fördernden Produkten kann es sich beispielsweise um empfindliche Produkte der Süß- oder Dauerbackwarenindustrie handeln, wie beispielsweise Kekse, Schokoladenprodukte, und dergleichen. Neben Produkten der Lebensmittelindustrie sind aber beispielsweise auch technische Produkte denkbar, wie elektronische oder elektrotechnische Komponenten, Maschinenelemente, pharmazeutische oder medizinische Produkte, und dergleichen, die in der Regel in großen Stückzahlen hergestellt und vertrieben werden.

Derartige Produkte werden nach ihrer Herstellung üblicherweise mehr oder weniger ungeordnet und unregelmäßig in einem Produktstrom, in dem sich eine Vielzahl identischer Produkte aneinander anliegend stauen, zu einer Verpackungsmaschine oder einer anderen Maschine, mittels der die Produkte weitergefördert und weiterverarbeitet werden, zugeführt. Insbesondere bei Verpackungsmaschinen kann es dabei erforderlich sein, dass die einzelnen Produkte regelmäßig und geordnet, vorzugsweise auch unter regelmäßigen, gleichen Abständen zueinander, zu einer Verpackungsstation oder einer anderen Weiterverarbeitungsstation zugeführt werden. Hierbei ist es somit erforderlich, die einzelnen Produkte aus dem zugeführten Produktstrom und Produktstau zu separieren, d.h. die Produkte aus dem Produktstrom zu vereinzeln, und dann vorzugsweise unter konstanten, gleichen Abständen zueinander einzeln weiterzufördern und der nächsten Verarbeitungsstation zuzuführen. Hierbei kann es auch gewünscht sein, dass die einzelnen Produkte in regelmäßigen Produktgruppen weitergefördert und der nächsten Verarbeitungs- oder Verpackungsstation zugeführt werden.

Aus der DE 10 2010 041 346 A1 sind beispielsweise ein Verfahren und eine Vorrichtung zum Befüllen einer mehrreihigen Verpackungsschale mit stückigen Produkten bekannt, insbesondere eine sogenannte Trayloading-Verpackungsmaschine. Bei dieser bekannten Verpackungsmaschine werden die stückigen Produkte auf mehreren im wesentlichen parallel zueinander angeordneten Bahnen gefördert, wobei die einzelnen Ströme der Produkte auf den mehreren Bahnen miteinander so synchronisiert werden, dass jeweils ein Produkt von einer Bahn im wesentlichen gleichzeitig mit jeweils einem Produkt von den anderen Bahnen an eine mehrreihige Verpackungsschale übergeben werden kann. Hierfür sind insbesondere Fördereinrichtungen zum Vereinzeln eines zunächst lückenlosen Produktstromes auf jeder der parallelen Bahnen derart vorgesehen, dass jeweils aufeinander folgende einzelne Produkte aus dem Produktstrom mit einem Abstand zueinander weitergefördert werden. Die Geschwindigkeit dieses Weiterförderns der einzelnen Produkte auf den mehreren parallelen Bahnen wird dabei so gesteuert, dass die Produkte auf allen Bahnen am Ende der Bahnen Positionen derart haben, dass jedes Produkt von jeder Bahn im wesentlichen gleichzeitig mit den Produkten von den anderen Bahnen an die Verpackungsschale übergeben wird. Diese Synchronisierung erfolgt dabei durch mehrere Einzelfördereinrichtungen, insbesondere Einzelförderbänder, die in Förderrichtung des Produktstroms hintereinander angeordnet und so ausgebildet sind, dass sie jeweils nur ein einzelnes Produkt fördern, wobei zwischen den Einzelfördereinrichtungen in Förderrichtung des Produktstroms Sensoreinrichtungen angeordnet sind, die jeweils die Position des einzelnen Produkts auf jeder Einzelfördereinrichtung in Förderrichtung ermitteln. Die Sensoreinrichtungen arbeiten dabei mit Steuereinrichtungen zusammen, die die Geschwindigkeit der Einzelfördereinrichtungen in Abhängigkeit von der jeweils ermittelten Position des Produkts auf jeder Einzelfördereinrichtung steuern (sogenannte "smart belts"). Auf diese Weise können Produktgruppen gebildet werden, die beispielsweise jeweils aus einer Reihe nebeneinander angeordneter Einzelprodukte bestehen, d.h. aus einer einzeiligen Reihe von Produkten, die quer zur Förderrichtung exakt miteinander ausgerichtet sind. Am Ende der Förderstrecke wird diese einreihige Produktgruppe an die Verpackungsschale übergeben, wobei die mehreren nebeneinander liegenden Einzelprodukte gleichzeitig in die mehreren nebeneinander angeordneten Fächer der Verpackungsschale übergeben werden. Die nächste einreihige Produktgruppe wird dann unter einem Abstand von der vorhergehenden Produktgruppe zugeführt und an die nächste Reihe der Aufnahmefächer der Verpackungsschale übergeben.

Bei diesem bekannten Verfahren werden die einzelnen Produkte oder Reihen mehrerer nebeneinander liegender einzelner Produkte mittels der mehreren, hintereinander geschalteten und nebeneinander angeordneten, geschwindigkeitsgeregelten Förderbänder zeit- und positionsgenau an die den Förderbändern nachgeordnete Aufnahmeeinrichtung zugeführt, im oben beschriebenen Fall also einem Behältnis, in dem die einzelnen Produkte geordnet und insbesondere gestapelt aufgenommen werden. In entsprechender Weise können die Produkte auch anderen, vergleichbaren Stapelvorrichtungen oder -mechanismen zugeführt werden.

Dieses bekannte Fördersystem ist aufgrund der Vielzahl der benötigten Einzelförderbänder jedoch konstruktiv aufwendig und es erfordert einen hohen Aufwand hinsichtlich der Steuerung und Regelung der Förderbänder zur Erzielung der oben beschriebenen Synchronisation. Aufgrund der Vielzahl der benötigten Einzelförderbänder ist mit diesem System auch ein hoher Platzbedarf verbunden. Alle zuvor genannten Faktoren tragen letztlich dazu bei, dass dieses bekannte System sehr kostenintensiv ist.

Um einzelne Produkte aus einem kontinuierlichen Produktstrom oder Produktstau zu vereinzeln, sind im Stand der Technik darüber hinaus rad- oder walzenartige Fördereinrichtungen bekannt, an deren Umfang Mitnehmer angebracht sind. Bei einer Rotation dieses Förderrads ergreifen die Mitnehmer jeweils das im Produktstau in Förderrichtung vorderste einzelne Produkt (bzw. gleichzeitig mehrere nebeneinander liegende vorderste Produkte) und vereinzeln dieses Produkt aus dem Stau, indem sie es beschleunigen. Bei derartigen bekannten Rotationsfördereinrichtungen sind die Mitnehmer typischerweise feststehend angebracht und radial zum Zentrum der Drehachse des Förderrads ausgerichtet. Teilweise sind die Mitnehmer dabei federnd so ausgeführt, dass sie leicht nachgeben, wenn sie zur Weiterförderung an dem betreffenden Produkt angreifen. Dadurch soll bewirkt werden, dass die Produkte nicht oder jedenfalls weniger stark beschädigt werden, wenn sie von dem betreffenden Mitnehmer ergriffen werden. Insbesondere bei empfindlichen Produkten der Lebensmittelindustrie, wie Keksen oder anderen Backwaren, stellt eine durch starre Mitnehmer bedingte Beschädigung der Produkte ein großes Problem dar. Aber auch bei gefederten Mitnehmern sind Produktbeschädigungen immer noch häufig zu verzeichnen.

Um die auf mehreren nebeneinander angeordneten Förderbahnen geförderten einzelnen Produkte reihenweise miteinander auszurichten, ist es im Stand der Technik darüber hinaus bekannt, Ausrichtschienen auf den Förderbändern anzuordnen. Hierbei wird beispielsweise ein Balken in die Förderbahn eingeschwenkt, auf den die geförderten Produkte auftreffen und an dem sie sich ausrichten. Hierbei ist allerdings in der Regel nur eine Ausrichtung vollständiger Produktreihen möglich.

Weitere Vorrichtungen und Verfahren zum Fördern von stückigen Produkten derart, dass die Produkte aus einem Produktstrom vereinzelt und anschließend gleichmäßig beabstandet und/oder in Gruppen weiter gefördert werden, sind beispielsweise aus der US 5, 020, 655 A und der eine Vorrichtung nach dem Oberbegriff des Anspruchs 1 offenbarenden EP 1 300 351 A1 bekannt. Ausgehend von den oben beschriebenen bekannten Vorrichtungen und Verfahren liegt der Erfindung die Aufgabe zugrunde, die oben beschriebenen Nachteile des Standes der Technik zu überwinden und somit eine verbesserte Vorrichtung sowie ein verbessertes Verfahren zu schaffen, durch die stückige Produkte aus einem Produktstrom oder Produktstau vereinzelt und anschließend unter gleichen oder regelmäßigen Abständen zueinander und/oder ggf. in Gruppen von Produkten weiter gefördert werden können. Sofern Produktgruppen gebildet werden sollen, besteht die Aufgabe des weiteren darin, die einzelnen Produkte innerhalb der Produktgruppe in Förderrichtung unter gleichen oder regelmäßigen Abständen zueinander anzuordnen, wobei auch die einzelnen Gruppen insgesamt in Förderrichtung unter gleichen oder regelmäßigen Abständen voneinander angeordnet sein sollen. Dabei können die Abstände zwischen den einzelnen Gruppen in Förderrichtung größer oder kleiner sein als die Abstände in Förderrichtung zwischen den einzelnen Produkten innerhalb einer Gruppe. Sofern die Produkte auf mehreren nebeneinander und im Wesentlichen parallel zueinander angeordneten Bahnen gefördert werden, sollen die einzelnen, auf den Bahnen nebeneinander liegenden Produkte miteinander so ausgerichtet werden, dass gleichmäßige Produktreihen und ggf. entsprechende Produktgruppen oder Produktmuster gebildet werden. Auf diese Weise soll es ermöglicht werden, die in der Förderstrecke aufeinander folgenden einzelnen Produkte bzw. Produktreihen bzw. Produktgruppen gesteuert, positions- und zeitgenau zu einer nachfolgenden Aufnahme- oder Weiterverarbeitungseinrichtung zuzuführen. Alle zuvor genannten Verfahrensschritte sollen dabei so ausgeführt werden, dass die Produkte schonend behandelt und insbesondere nicht beschädigt werden. Darüber hinaus sollen durch die Erfindung eine Vorrichtung und ein Verfahren zur Durchführung der genannten Schritte geschaffen werden, die bzw. das einen geringeren Steuerungs- und Regelungsaufwand als bei den im Stand der Technik bekannten Systemen erfordert. Auch soll die Vorrichtung insgesamt kompakter ausgeführt sein und einen geringeren Platzbedarf haben als die bekannten Vorrichtungen. Letztlich sollen durch die Erfindung somit eine Vorrichtung und ein Verfahren geschaffen werden, die bzw. das insgesamt kostengünstiger zu realisieren und zu betreiben ist.

Diese Aufgabe wird erfindungsgemäß gelöst durch eine Vorrichtung zum Fördern von stückigen Produkten gemäß Patentanspruch 1 sowie durch ein entsprechendes Verfahren gemäß Patentanspruch 10. Für den Fall, dass mehrere nebeneinander und im wesentlichen parallel zueinander angeordnete Bahnen vorgesehen sind, auf denen die Produkte gefördert werden, wird die Aufgabe erfindungsgemäß gelöst durch eine Vorrichtung gemäß Patentanspruch 7 sowie durch ein entsprechendes Verfahren gemäß Patentanspruch 11.

Erfindungsgemäß werden somit eine Vorrichtung und ein Verfahren geschaffen zum Fördern von stückigen Produkten derart, dass die Produkte aus einem Produktstrom vereinzelt und anschließend gleichmäßig beabstandet und/oder in Gruppen weiter gefördert werden. Die erfindungsgemäße Vorrichtung umfasst dabei die Merkmale des Anspruchs 1. Das erfindungsgemäße Verfahren wird unter Verwendung dieser erfindungsgemäßen Vorrichtung durchgeführt und umfasst entsprechende Verfahrensschritte.

Sofern die stückigen Produkte auf mehreren nebeneinander und im wesentlichen parallel zueinander angeordneten Bahnen gefördert werden, werden erfindungsgemäß eine Vorrichtung und ein Verfahren zum Fördern der stückigen Produkte geschaffen, bei denen die Produkte auf jeder der Bahnen aus einem Produktstrom vereinzelt und anschließend gleichmäßig beabstandet und/oder in Gruppen weiter gefördert werden. Die erfindungsgemäße mehrbahnige Vorrichtung weist dabei in jeder der einzelnen Bahnen eine der zuvor beschriebenen einbahnigen Fördervorrichtungen auf. Die erfindungsgemäße mehrbahnige Fördervorrichtung umfasst darüber hinaus Einrichtungen zum Steuern der einzelnen Fördervorrichtungen in den mehreren Bahnen so, dass die einzelnen Produktströme auf den mehreren Bahnen miteinander derart synchronisiert werden, dass jeweils ein Produkt auf einer Bahn nach der Vereinzelung aus dem jeweiligen Produktstrom im wesentlichen mit den jeweiligen Produkten auf einzelnen ausgewählten oder allen der anderen Bahnen so ausgerichtet ist, dass die Produkte auf den betroffenen Bahnen in einer Richtung senkrecht oder schräg zu der Förderrichtung der Produkte im Wesentlichen in einer Reihe nebeneinander angeordnet sind. Das erfindungsgemäße mehrbahnige Förderverfahren wird unter Verwendung der zuvor beschriebenen erfindungsgemäßen mehrbahnigen Fördervorrichtung durchgeführt und umfasst entsprechende Verfahrensschritte.

Erfindungsgemäß werden die Produkte somit nicht lediglich von einer ersten Fördereinrichtung (Zuführeinrichtung) an eine zweite Fördereinrichtung (Abführeinrichtung) übergeben, sondern die Produkte werden in der Phase der Übergabe von der Zuführeinrichtung an die Abführeinrichtung zusätzlich von einer weiteren Fördereinrichtung gehalten und insbesondere geführt. Diese zusätzliche Fördereinrichtung weist dafür bewegliche Mitnehmereinrichtungen auf, die so angesteuert werden können, dass sie in der Phase der Übergabe der Produkte von der Zuführeinrichtung an die Abführeinrichtung zwischen zwei aufeinander folgende Produkte eingreifen und für eine gewisse Zeitspanne an dem/den in dem Produktstrom jeweils vordersten Produkt(en) derart angreifen, dass sie das betreffende Produkt in dieser Phase halten und führen und dabei aus dem Produktstrom ablösen und gleichzeitig so beschleunigen, dass die vereinzelten Produkte anschließend auf der Abführeinrichtung unter regelmäßigen, gleichen Abständen voneinander angeordnet sind und auf diese Weise beabstandet voneinander weiter gefördert werden, nachdem die Mitnehmereinrichtungen sich von ihnen gelöst haben, d.h. nachdem die Mitnehmereinrichtungen die Produkte freigegeben haben. Auf diese Weise werden die einzelnen Produkte also gesteuert, räumlich und zeitlich exakt an die nachfolgende Abführeinrichtung übergeben und auf dieser positioniert und weiter gefördert.

Sofern mehrere Bahnen nebeneinander und im wesentlichen parallel zueinander angeordnet sind, werden die einzelnen Produkte in entsprechender Weise durch die in jeder Förderbahn vorgesehenen Fördereinrichtungen mit ihren angesteuerten Mitnehmereinrichtungen jeweils gezielt und gesteuert, positions- und zeitgenau von der Zuführeinrichtung an die Abführeinrichtung übergeben, wobei die Produkte auf jeder der Bahnen in entsprechender Weise gesteuert aus dem jeweils zugeführten Produktstrom vereinzelt, beschleunigt und unter vorgegebenen, gleichmäßigen Abständen voneinander auf der Abführeinrichtung weiter gefördert und abgeführt werden. Die Fördervorrichtungen der einzelnen Bahnen werden dabei so gesteuert und miteinander synchronisiert, dass die Produkte schließlich auf den mehreren Bahnen beispielsweise in einer geraden Reihe oder Linie nebeneinander angeordnet sind, d.h. beispielsweise auf einer geraden Linie senkrecht zu der Förderrichtung. Alternativ können die Produkte auf den einzelnen Bahnen auch so miteinander ausgerichtet sein, dass sie auf einer zur Förderrichtung schrägen Linie angeordnet sind, die von der rechtwinkligen Anordnung abweicht. In weiteren beispielhaften Ausführungsformen können die nebeneinander liegenden Produkte auch auf anderen Linien auf den nebeneinander liegenden Bahnen angeordnet sein, beispielsweise Kurven-, Wellen- oder Zick-Zack-Linien. Wesentlich ist dabei immer, dass die einzelnen Produkte auf den mehreren, nebeneinander angeordneten Bahnen in einer festen, gleichmäßigen, vorgegebenen und exakt gesteuerten räumlichen Ausrichtung zueinander angeordnet sind.

Bei der einbahnigen Ausführung der erfindungsgemäßen Fördervorrichtung können die Produkte somit unter gleichen Abständen voneinander auf der Abführeinrichtung weiter gefördert werden. Alternativ können aber auch Produktgruppen gebildet werden, wobei jeweils eine Gruppe mehrere Produkte umfasst, die innerhalb der Gruppe unter gleichen Abständen voneinander angeordnet sind. Die einzelnen Gruppen sind in Förderrichtung dann typischerweise unter anderen Abständen voneinander angeordnet, die nicht den Abständen der einzelnen Produkte innerhalb einer Gruppe entsprechen. Typischerweise sind die Abstände zwischen den einzelnen Gruppen dabei größer als die Abstände zwischen den einzelnen Produkten innerhalb einer Gruppe.

In dem Fall mehrerer nebeneinander angeordneter Bahnen können entsprechende Gruppen auf jeder oder einzelnen oder mehreren ausgewählten der Bahnen vorgesehen sein, wobei diese Gruppen auf den Bahnen wiederum gesteuert und in einer festen, vorzugsweise regelmäßigen räumlichen Beziehung zu den jeweiligen Produktgruppen auf den anderen Bahnen angeordnet sind. Da die Positionen der einzelnen Produkte auf den mehreren, nebeneinander angeordneten Bahnen mit der erfindungsgemäßen Vorrichtung sowohl bahnweise (d.h. in Förderrichtung) als auch reihenweise (d.h. im wesentlichen quer zur Förderrichtung über die mehreren nebeneinander angeordneten Bahnen hinweg) genau ausgewählt und angesteuert werden können, können mit der erfindungsgemäßen Vorrichtung und dem erfindungsgemäßen Verfahren beliebige Anordnungen, Muster und Gruppierungen von Produkten, d.h. sogenannte "Produktteppiche" oder "Produktmatrizen" erzeugt werden.

In einer besonderen Ausführungsform der Erfindung können diese "Produktteppiche" auch zeitabhängig flexibel gestaltet werden, d.h. die Produktförderung auf den einzelnen Bahnen kann derart gesteuert werden, dass sich die Produktanordnungen und die Ausrichtungen der Produkte zueinander über die Zeit verändern, vorzugsweise wiederum in einer regelmäßigen Art und Weise.

Insgesamt ist die Anordnung und Ausrichtung der einzelnen Produkte auf den einzelnen Bahnen und die dadurch ggf. bedingte Bildung von Produktgruppen und/oder "Produktteppichen" abhängig von der vorgesehenen nachfolgenden Weiterverarbeitung der Produkte und deren räumlicher und zeitlicher Abfolge. Wie eingangs erläutert wurde, kann es sich hierbei beispielsweise um eine zeitgleiche Übergabe mehrerer nebeneinander angeordneter Produkte als Produktgruppe oder Produktreihe an eine Aufnahmevorrichtung, insbesondere ein Behältnis oder eine Verpackung, handeln, in dem/der die Produkte entsprechend gruppiert aufgenommen werden.

Damit die beschriebenen Produktgruppen oder Produktteppiche gebildet werden können, umfasst die erfindungsgemäße Fördervorrichtung Steuerungseinrichtungen, die mit den Zuführeinrichtungen, den Abführeinrichtungen und den Mitnehmerfördereinrichtungen zusammenarbeiten und deren Fördergeschwindigkeiten individuell derart steuern, dass die Produkte nach ihrer Vereinzelung aus dem jeweiligen Produktstrom gleichmäßig beabstandet und wahlweise in regelmäßigen Gruppen, wie oben beschrieben, weitergefördert werden können.

Sofern die Produkte auf der Zuführeinrichtung nicht von vorneherein in einem Stau hintereinander bzw. aneinander anliegen oder anderenfalls nicht unter gleichmäßigen Abständen voneinander so angeordnet sind, dass die Mitnehmer der Fördereinrichtungen korrekt zwischen zwei aufeinander folgende Produkte eingreifen und diese Produkte für die Weiterförderung, wie oben beschrieben, ergreifen können, ist es erforderlich, zunächst einen Produktstau oder eine Anordnung der einzelnen Produkte auf den Zuführeinrichtungen unter einem gleichmäßigen Abstand voneinander zu erzeugen. Anderenfalls würden die Mitnehmereinrichtungen im Zuge ihrer Bewegung unter Umständen falsch an den einzelnen Produkten angreifen, wodurch die Produkte dann eventuell beschädigt werden könnten. Die Steuerungseinrichtungen der erfindungsgemäßen Fördervorrichtung steuern in einer bevorzugten Ausführungsform daher die Fördergeschwindigkeiten der Zuführeinrichtungen und/oder der Mitnehmerfördereinrichtungen individuell derart, dass die Produkte in dem zugeführten Produktstrom in einem Stau aneinander anliegen oder in einem gleichmäßigen Abstand voneinander angeordnet sind, bevor die Mitnehmer zwischen zwei aufeinander folgende Produkte eingreifen. Die Fördergeschwindigkeiten werden somit derart gesteuert, dass die zugeführten Produkte immer genau so positioniert sind, dass die Mitnehmer die Produkte korrekt ergreifen und an die Abführeinrichtung übergeben können, ohne sie zu beschädigen.

In der erfindungsgemäßen Fördervorrichtung wird die Staubildung der Produkte auch durch bewegliche Stoppereinrichtungen bewirkt, die derart mit den Steuerungseinrichtungen zusammenarbeiten, dass sie bei Bedarf in den Förderbereich der Zuführeinrichtungen hinein bewegt werden, um die zugeführten Produkte aufzuhalten, d.h. um zu bewirken, dass die Produkte in dem zugeführten Produktstrom in einem Stau aneinander liegen. Anschließend werden die Stoppereinrichtungen wieder aus dem Förderbereich der Zuführeinrichtungen heraus bewegt, um zu bewirken, dass der Produktstrom weiter gefördert wird und für den Eingriff der Mitnehmer zwischen zwei aufeinander folgende Produkte freigegeben wird.

In einer weiteren bevorzugten Ausführungsform der erfindungsgemäßen Vorrichtung sind die in dem Übergangsbereich der Zuführeinrichtungen und der Abführeinrichtungen angeordneten weiteren Fördereinrichtungen umlaufende Fördereinrichtungen, bei denen mehrere Mitnehmereinrichtungen unter regelmäßigen Abständen voneinander an ihrem Umfang angeordnet sind und sich von diesen im Wesentlichen radial nach außen erstrecken, und wobei die Mitnehmereinrichtungen mittels einer Kurvenbahn und in diese eingreifenden Hebeln in der Richtung des Umfangs der Fördereinrichtungen gesteuert verschwenkbar gelagert sind.

In einer bevorzugten Ausführungsform sind diese umlaufenden Mitnehmerfördereinrichtungen rad- oder walzenartige Fördereinrichtungen, die sich um eine Achse drehen, die senkrecht zu der Förderrichtung der Produkte und parallel zu der Förderebene der Zuführeinrichtungen und der Abführeinrichtungen angeordnet ist. In einer anderen bevorzugten Ausführungsform sind die umlaufenden Mitnehmerfördereinrichtungen (Endlos-)Riemen- oder (Endlos- )Ketten-Fördereinrichtungen, die sich um mindestens zwei parallel zueinander angeordnete Achsen drehen, die senkrecht zu der Förderrichtung der Produkte und parallel zu der Förderebene der Zuführeinrichtungen und der Abführeinrichtungen angeordnet sind.

In dem Fall der mehreren nebeneinander und im wesentlichen parallel zueinander angeordneten Produktförderbahnen können in einer Ausführungsform der erfindungsgemäßen Fördervorrichtung die Antriebe der umlaufenden Mitnehmerfördereinrichtungen in jeder der Bahnen miteinander gekoppelt sein, wobei die Einrichtungen zum Steuern der Fördervorrichtungen in den mehreren Bahnen mit den Zuführeinrichtungen und den Abführeinrichtungen in jeder der Bahnen zusammenarbeiten und deren Fördergeschwindigkeiten individuell derart steuern, dass die Produkte in jeder der Bahnen nach ihrer Vereinzelung aus dem jeweiligen Produktstrom unter gleichmäßigen Abständen voneinander und wahlweise in regelmäßigen Gruppen weitergefördert werden.

Alternativ zu diesen gekoppelten Antrieben können in einer weiteren Ausführungsform der Erfindung die umlaufenden Mitnehmerfördereinrichtungen in jeder der Bahnen jeweils einen eigenen Antrieb haben, der nicht mit den Antrieben der anderen umlaufenden Mitnehmerfördereinrichtungen gekoppelt ist, wobei die Einrichtungen zum Steuern der Fördervorrichtungen in den mehreren Bahnen dann mit den Zuführeinrichtungen, den Abführeinrichtungen und den umlaufenden Mitnehmerfördereinrichtungen in jeder der Bahnen zusammenarbeiten und deren Fördergeschwindigkeiten individuell derart steuern, dass die Produkte in jeder der Bahnen nach ihrer Vereinzelung aus dem jeweiligen Produktstrom wiederum unter gleichmäßigen Abständen voneinander und wahlweise in regelmäßigen Gruppen weitergefördert werden.

Weitere Einzelheiten und Vorteile der Erfindung ergeben sich aus der nachfolgenden detaillierten Beschreibung verschiedener Ausführungsbeispiele anhand der beigefügten Zeichnungen.
- Fig. 1a: zeigt die erfindungsgemäße Fördervorrichtung in einer Ansicht von der Seite.
- Fig. 1b: zeigt die erfindungsgemäße Fördervorrichtung aus Fig. 1a in einer Schnittansicht entlang der Linie A-A von oben.
- Fig. 2a bis 2c: zeigen die erfindungsgemäße Fördervorrichtung in drei verschiedenen Drehwinkelstellungen, jeweils in einer Seitenansicht und einer Ansicht von oben, entsprechend den Fig. 1a und 1b.
- Fig. 3a: zeigt eine Ausführungsform der erfindungsgemäßen Fördervorrichtung in einer Ansicht von der Seite.
- Fig. 3b: zeigt ein Detail der Fördervorrichtung aus Fig. 3a.
- Fig. 4a: zeigt eine andere Ausführungsform der erfindungsgemäßen Fördervorrichtung in einer Seitenansicht sowie einer schematischen Teilansicht von oben.
- Fig. 4b: zeigt ein Detail der Fördervorrichtung aus Fig. 4a.
- Fig. 5a: zeigt schematisch eine Ausführungsform einer einbahnigen Fördervorrichtung gemäß der Erfindung.
- Fig. 5b bis 5e: zeigen verschiedene Ausführungsformen einer zweibahnigen Fördervorrichtung gemäß der Erfindung.

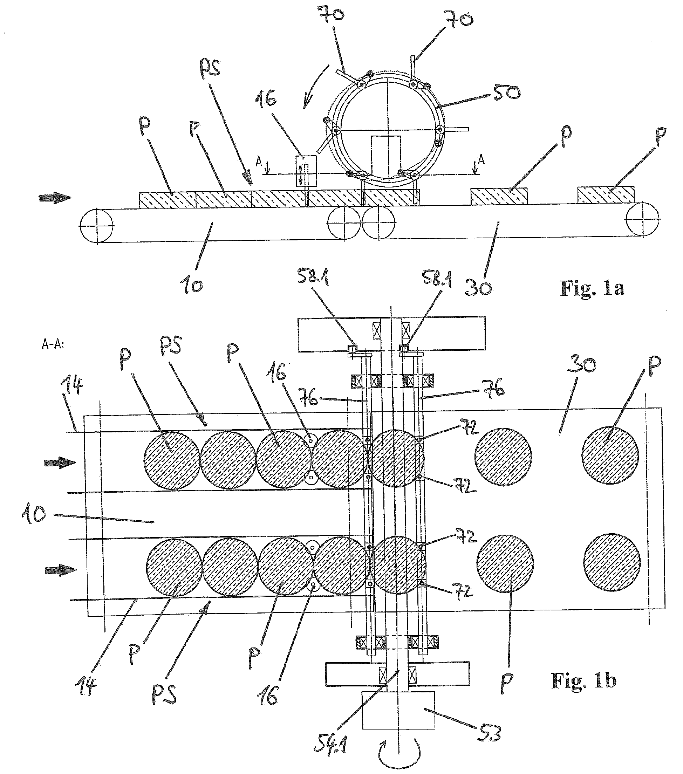

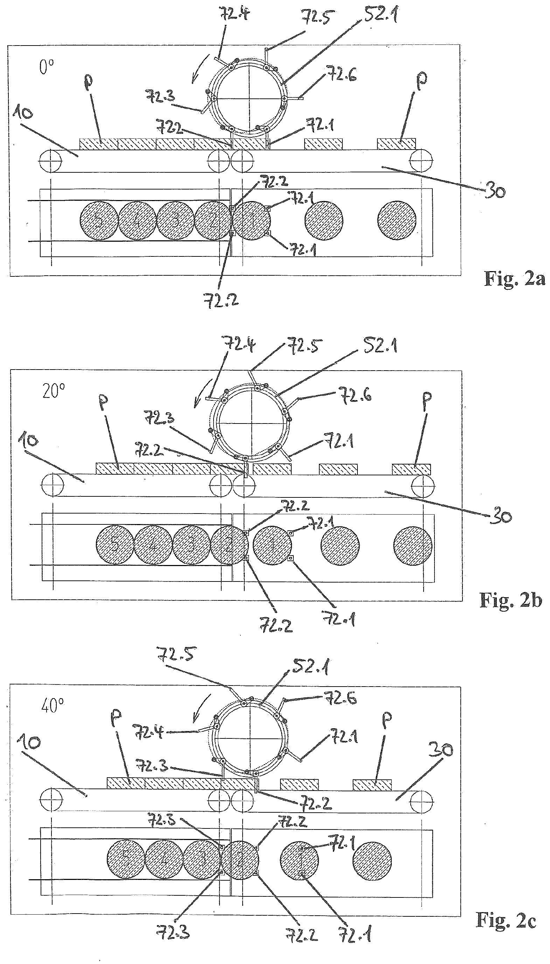

Eine Fördervorrichtung für stückige Produkte P ist in einer Seitenansicht schematisch in Fig. 1a dargestellt. Fig. 1b zeigt diese Fördervorrichtung in einer Draufsicht von oben im Schnitt entlang der Linie A-A aus Fig. 1a. In Fig. 1b werden die Produkte P auf zwei parallelen, nebeneinander liegenden Bahnen gefördert. Die Fig. 2a bis 2c zeigen die Fördervorrichtung in entsprechender Weise jeweils in einer schematischen Seitenansicht und einer schematischen Draufsicht von oben, wobei die Fig. 2a bis 2c verschiedene Stadien der Produktförderung darstellen. Die Seitenansicht im oberen Teil der Fig. 2a entspricht somit im wesentlichen der Seitenansicht der Fig. 1a. Wie aus den jeweiligen Draufsichten von oben erkennbar ist, zeigen die Fig. 2a bis 2c jeweils eine aus einer Förderbahn bestehende Fördervorrichtung. Mittels dieser Fördervorrichtung werden die Produkte P aus einem Produktstrom oder Produktstau PS vereinzelt und dann unter gleichmäßigen Abständen zueinander weiter gefördert. Dabei verläuft die Hauptförderrichtung der Produkte P in den genannten Figuren sowie den weiteren, im Folgenden diskutierten Figuren immer von links nach rechts.

Die einzelnen stückigen Produkte P werden mittels Zuführeinrichtungen 10 zu der Gesamtvorrichtung zugeführt. Die Zuführeinrichtungen 10 sind dabei insbesondere umlaufende Band- oder Riemen- oder Kettenfördereinrichtungen, beispielsweise ein sogenanntes Stauband. Auf diesen Zuführeinrichtungen 10 werden die Produkte P als einreihiger Produktstrom PS zugeführt, wobei die Produkte P hier insbesondere im Stau aneinander anliegen. Um eine geordnete, regelmäßige, lineare Zuführung der Produkte P zu gewährleisten, können im Bereich der Zuführeinrichtungen 10 zusätzlich Seitenführungen 14 für die Produkte P vorgesehen sein.

In Förderrichtung hinter den Zuführeinrichtungen 10 sind Abführeinrichtungen 30 angeordnet, die die Produkte P von den Zuführeinrichtungen 10 übernehmen und weiter fördern. Die Abführeinrichtungen 30 sind dabei insbesondere wiederum umlaufende Band- oder Riemen- oder Kettenfördereinrichtungen, beispielsweise ein sogenanntes Abgabeband. Wie aus den Zeichnungen erkennbar ist, sind die Zuführeinrichtungen 10 und die Abführeinrichtungen 30 vorzugsweise derart hintereinander angeordnet, dass die Produkte P im wesentlichen ohne Höhenversatz in einer gleich bleibenden Ebene gefördert werden und insbesondere in einer Ebene von den Zuführeinrichtungen 10 an die Abführeinrichtungen 30 übergeben werden.

Oberhalb der aus den Zuführeinrichtungen 10 und den Abführeinrichtungen 30 gebildeten Förderstrecke sind im Bereich des Übergangs von den Zuführeinrichtungen 10 zu den Abführeinrichtungen 30 weitere Fördereinrichtungen 50 zum Fördern der Produkte P angeordnet. Wie beispielsweise die Seitenansichten der Fig. 1a und der Fig. 2a bis 2c zeigen, sind diese Fördereinrichtungen 50 insbesondere auf einer geschlossenen Bahn umlaufende Fördereinrichtungen, insbesondere rad- oder walzenartige Fördereinrichtungen, d.h. ein Förderrad oder eine Förderwalze 52.1. Dieses Förderrad bzw. diese Förderwalze 52.1 drehen sich auf einer Hauptwelle 54.1 um eine zentrale Achse, die senkrecht zu der Förderrichtung der Produkte P und parallel zu der von den Zuführeinrichtungen 10 und den Abführeinrichtungen 30 gebildeten Förderebene liegt. Das Förderrad bzw. die Förderwalze 52.1 dreht sich dabei entgegengesetzt zu dem Uhrzeigersinn, wie es durch den Pfeil in den Seitenansichten der Fig. 1a und 2abis 2c angedeutet ist. Sofern bezüglich der Fördereinrichtungen 50 nachfolgend von einem Förderrad gesprochen wird, ist darunter, je nach Anwendungsfall, in der Regel immer auch die Ausführungsform als Förderwalze oder vergleichbare andere Ausführungsformen umlaufender Fördereinrichtungen zu verstehen.

Das Förderrad bzw. die Förderwalze 52.1 wird über die die Drehachse bildende Hauptwelle 54.1 von einem Antrieb 53 bewegt, beispielsweise einem Elektromotor und insbesondere einem steuer- und regelbaren Servomotor. Die Steuerung oder Regelung dieses Servoantriebs ist ein wesentliches Merkmal der vorliegenden Fördervorrichtung, wie es aus der nachfolgenden Diskussion ersichtlich wird.

Bei der in Fig. 1b gezeigten Ausführungsform werden zwei parallel nebeneinander verlaufende einreihige Produktströme PS gefördert. Die umlaufenden Fördereinrichtungen 50 sind hier daher als Förderwalze 52.1 oder als zwei nebeneinander liegende Förderräder 52.1 so ausgeführt, dass die Produkte P der beiden Produktströme PS nebeneinander liegend gefördert werden können. In der Ausführungsform der Fig. 1b werden die Förderwalze 52.1 bzw. die zwei nebeneinander liegende Förderräder 52.1 über eine gemeinsame Hauptwelle 54.1 mittels eines gemeinsamen Antriebs 53 angetrieben. Die Produkte P der beiden nebeneinander liegenden Reihen werden somit von der Förderwalze 52.1 mit der gleichen Charakteristik, beispielsweise der gleichen Geschwindigkeit, bewegt. Die Förderwalze 52.1 kann somit gewissermaßen aus zwei parallel nebeneinander angeordneten Förderrädern gebildet sein, die über eine gemeinsame Drehachse 54.1 angetrieben werden. Wie unten weiter diskutiert wird, können die einzelnen, nebeneinander angeordneten Förderräder 52.1 der mehreren nebeneinander liegenden Förderbahnen aber auch isoliert, getrennt voneinander angetrieben werden. In diesem Fall ist dann nicht ein gemeinsamer Antrieb 53 für alle nebeneinander liegenden Förderräder vorgesehen, sondern vielmehr hat jedes Förderrad seinen eigenen Antrieb, der insbesondere auch individuell gesteuert werden kann.

Wie die Fig. 1a, 1b und 2a bis 2c zeigen, weisen die Fördereinrichtungen 50 (Förderrad oder Förderwalze 52.1) Mitnehmereinrichtungen 70 auf, die unter gleichen Abständen voneinander an dem Umfang der Fördereinrichtungen 50 angeordnet sind und sich von diesen im wesentlichen radial nach außen erstrecken. Jede einzelne der Mitnehmereinrichtungen 70 ist an den Fördereinrichtungen 50 so angebracht und gelagert, dass jede Mitnehmereinrichtung 70 in Förderrichtung der Produkte P bzw. in der Drehrichtung der Fördereinrichtungen 50 verschwenkbar ist. Die Schwenkbewegung der Mitnehmereinrichtungen 70 kann dabei so gesteuert werden, dass die Mitnehmereinrichtungen 70 bei einer Drehung der Fördereinrichtungen 50 jeweils zwischen zwei in dem zugeführten Produktstrom PS aufeinander folgende Produkte P derart eingreifen, dass die Mitnehmereinrichtungen 70 bei einer Weiterdrehung der Fördereinrichtungen 50 die Produkte P bei der Übergabe von den Zuführeinrichtungen 10 an die Abführeinrichtungen 30 derart halten und insbesondere führen, dass die Produkte P gezielt und gesteuert aus dem zugeführten Produktstrom PS vereinzelt und unter gleichmäßigen Abständen voneinander auf den Abführeinrichtungen 30 angeordnet und von diesen weiter gefördert und abgeführt werden.

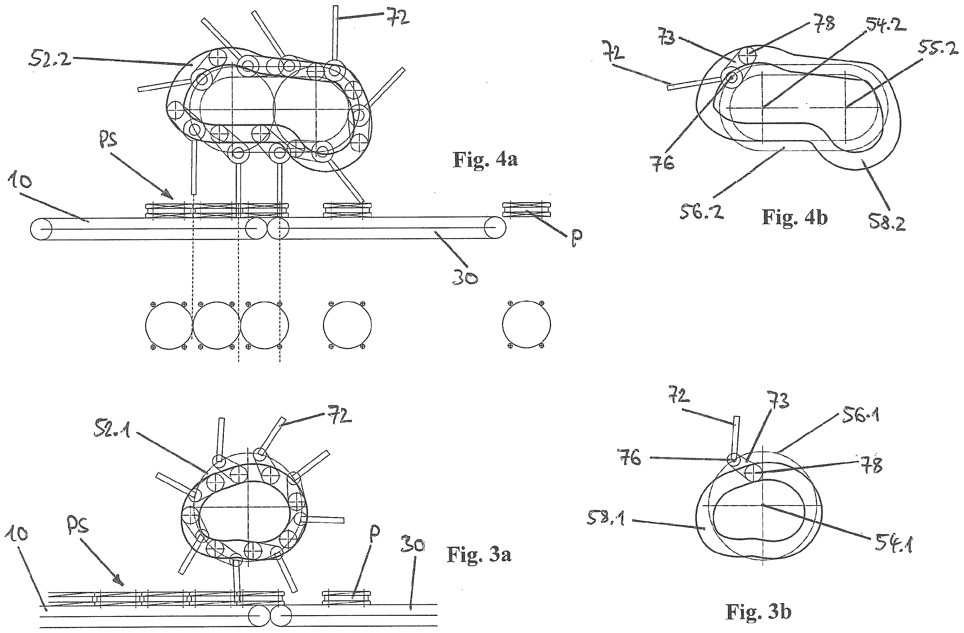

Wie die Seitenansichten der Fig. 1a und 2a bis 2c zeigen, sind mehrere Mitnehmereinrichtungen 70, in den dargestellten Ausführungsformen insbesondere sechs Mitnehmereinrichtungen 70, am Umfang des Förderrads 52.1 angeordnet. Die Mitnehmereinrichtungen 70 weisen dabei vom Umfang des Förderrads 52.1 im wesentlichen radial nach außen, wobei sie aber nicht feststehend angeordnet sind sondern, wie vorstehend schon erwähnt, in Umfangsrichtung verschwenkbar sind. Fig. 3a zeigt eine gegenüber der Darstellung der Fig. 1a etwas abgewandelte Ausführungsform des Förderrads 52.1. Während das Förderrad 52.1 in Fig. 1a sechs Mitnehmereinrichtungen 70 aufweist, hat das Förderrad 52.1 der Fig. 3a acht am Umfang angeordnete Mitnehmereinrichtungen 70. Fig. 3b zeigt ein Detail des Förderrads 52.1 aus Fig. 3a zur Veranschaulichung und Erläuterung seiner Einzelteile. So ist in Fig. 3b beispielhaft nur eine der Mitnehmereinrichtungen 70 dargestellt.

Jede der Mitnehmereinrichtungen 70 besteht zunächst aus einem Mitnehmer oder Mitnehmerfinger 72, der zur Förderung an den Produkten P angreift. Jede Mitnehmereinrichtung 70 ist mittels einer Lagerung 76 im wesentlichen an dem Umfang des Förderrads 52.1 angebracht und insbesondere verschwenkbar gelagert. Diese Mitnehmerlagerung 76 bildet somit die Drehachse oder -welle, um die die jeweilige Mitnehmereinrichtung 70 verschwenkt werden kann. Diese Mitnehmerlagerung bzw. Mitnehmerachse 76 wird somit auf einer bei der Drehung des Förderrads 52.1 gebildeten Kreisbahn 56.1 geführt. Für ihre gesteuerte Verschwenkung ist jede Mitnehmereinrichtung 70 mit einer Kurvenbahn 58.1 gekoppelt, die im wesentlichen neben der jeweils zugehörigen Kreisbahn 56.1 des Förderrads 52.1 liegt, die aber eine mehr oder weniger unregelmäßige, insbesondere von einer exakten Kreisbahn abweichende Form hat (vgl. Fig. 3b). Die Form bzw. der Verlauf der Kurvenbahn 58.1 ist dabei insbesondere durch die Charakteristik vorgegeben, nach der sich die Mitnehmereinrichtungen 70 in Abhängigkeit von ihrer jeweiligen Position am Umfang bzw. auf der Kreisbahn 56.1 des Förderrads 52.1 bzw. in Abhängigkeit von der Drehstellung des Förderrads 52.1 verschwenken müssen. Durch die Kurvenbahn 58.1 wird somit die Schwenkbewegung und insbesondere die jeweilige Winkelstellung der Mitnehmereinrichtungen 70 in Abhängigkeit von der Drehbewegung und Position des Förderrads 52.1 gesteuert.

Wie insbesondere Fig. 3b zeigt, ist der Mitnehmerfinger 72 jeder Mitnehmereinrichtung 70 über einen Hebel 73 mit einer Mitnehmerrolle 78 verbunden, die in der Kurvenbahn 58.1 läuft. Durch die Bewegung der Mitnehmerrolle 78 in der Kurvenbahn 58.1 wird der Mitnehmerfinger 72 aufgrund der Anlenkung über den Hebel 73 bei einer Drehung des Förderrads 52.1 jeweils um die die Mitnehmerlagerung bildende Drehachse 76 verschwenkt. Die Fig. 1a, 2a bis 2c und 3a zeigen somit die mehreren Mitnehmereinrichtungen 70 am Umfang des Förderrads 52.1 in ihren unterschiedlichen Schwenkstellungen in Abhängigkeit von der Position der dem jeweiligen Mitnehmerfinger 72 zugeordneten Mitnehmerrolle 78 in der Kurvenbahn 58.1. Die Kurvenbahn 58.1 ist dabei so ausgelegt, dass die Schwenkbewegung der jeweiligen Mitnehmereinrichtung 70 in Abhängigkeit von der Drehstellung des Förderrads 52.1 mit unterschiedlichen Geschwindigkeiten erfolgen kann. In bestimmten Abschnitten der Kreisbahn 56.1 kann damit beispielsweise eine nur langsame Schwenkbewegung oder keine Schwenkbewegung der Mitnehmerfinger 72 bewirkt werden, während in anderen Abschnitten der Drehbewegung des Förderrads 52.1 entlang der Kreisbahn 56.1 eine Beschleunigung bzw. eine schnellere Verschwenkung der Mitnehmerfinger 72 erfolgt. Diese Bewegungscharakteristik hängt von den jeweiligen Gegebenheiten der Produktförderung ab, ist somit also konstruktiv u.a. von den Abmessungen der zu fördernden stückigen Produkte P, von der Fördergeschwindigkeit, der radialen Länge der Mitnehmerfinger 72, dem Abstand der Anordnung des Förderrads 52.1 über oder neben den Zuführeinrichtungen 10 und den Abführeinrichtungen 30, und anderen, entsprechenden Parametern, abhängig. Es versteht sich, dass insbesondere durch eine Veränderung der Form der Kurvenbahn 58.1 die Schwenkbewegungscharakteristik der Mitnehmereinrichtungen 70 verändert werden kann.

Die Kurvenbahn 58.1 zur Führung der Mitnehmereinrichtungen 70 der umlaufenden Fördereinrichtungen 50 ist insbesondere so ausgelegt, dass eine Bewegungscharakteristik der Mitnehmereinrichtungen 70 geschaffen wird, bei der die Mitnehmerfinger 72 im wesentlichen senkrecht zwischen die in dem Stau des Produktstroms PS in Förderrichtung ganz vorne liegenden Produkte P eintauchen und die Produkte P in dieser senkrechten Stellung ergreifen, halten und für eine bestimmte Wegstrecke der Förderbahn führen. Zu diesem Zwecke sollten die Produkte P vorzugsweise eine Form haben, die einen derartigen Eingriff der Mitnehmerfinger 72 ermöglicht. So sollten die Produkte P beispielsweise eine runde oder im wesentlichen runde oder ovale Form oder anders gekrümmte Form haben, durch die zwischen zwei aufeinander folgenden, aneinander anliegenden Produkten P ein "Eintauchfenster" für die Mitnehmer 72 in Form von seitlichen Freiräumen zwischen den aufeinander folgenden Produkten P geschaffen wird (vgl. z.B. Fig. 1b).

Aufgrund dieser Führung der Produkte P durch die Mitnehmereinrichtungen 70 werden die Produkte P aus dem über die Zuführeinrichtungen (Zuführ- oder Stauband) 10 zugeführten Produktstrom PS vereinzelt und dabei ggf. beschleunigt, an die nachfolgenden Abführeinrichtungen (Abgabeband) 30 übergeben und auf diesen unter den erzeugten, gleichmäßigen Abständen voneinander weiter gefördert. Die Fördergeschwindigkeit des Abgabebands 30 kann sich dabei von der Fördergeschwindigkeit des Zuführbands 10 unterscheiden; insbesondere kann die Fördergeschwindigkeit des Abgabebands 30 größer sein als die Fördergeschwindigkeit des Zuführbands 10.

Die Bewegungsabfolge der Fördereinrichtungen 50 bzw. des Förderrads 52.1 mit den Mitnehmereinrichtungen 70 bzw. den Mitnehmerfingern 72 wird nachfolgend unter Bezugnahme auf die Fig. 2a bis 2c detaillierter beschrieben. Die Seitenansicht der Fig. 2a entspricht der Darstellung der Fig. 1a. Die Fig. 2a, 2b und 2c zeigen verschiedene Drehwinkelstellungen des Förderrads 52.1, nämlich eine erste Stellung (Fig. 2a), eine um 20° entgegen dem Uhrzeigersinn weiter gedrehte Stellung (Fig. 2b), sowie eine nochmals um 20° entgegen dem Uhrzeigersinn weiter gedrehte Stellung (Fig. 2c). Zur Veranschaulichung sind die sechs einzelnen Mitnehmerfinger 72 der Mitnehmereinrichtungen 70 entsprechend den ihnen jeweils zugeordneten stückigen Produkten "1", "2", "3", usw. hier als Mitnehmer 72.1, 72.2, 72.3, 72.4, 72.5, 72.6 bezeichnet. Bei der Vereinzelung der Produkte P aus dem Produktstau PS wird jedes einzelne Produkt P durch senkrecht stehende vordere und ggf. auch hintere Mitnehmerfinger 72 gehalten und geführt. In der Ausgangsstellung der Fig. 2a greifen somit die Mitnehmerfinger 72.1 in Förderrichtung an der Vorderseite des vordersten Produkts "1" an, während die nächsten Mitnehmerfinger 72.2 zwischen die Produkte "1" und "2" eingreifen und dann das nachfolgende Produkt "2" an seiner Vorderseite ergreifen. Dabei können die Mitnehmer 72.2, je nach Anwendungsfall, ggf. auch das vorausgehende Produkt "1" an seiner Rückseite ergreifen. Beide aufeinander folgenden Mitnehmer 72.1 und 72.2 greifen dabei in senkrechter Richtung zwischen die beiden betreffenden, aufeinander folgenden Produkte ein, greifen in dieser senkrechten Stellung an den Produkten an und bewegen sich bei einer Weiterdrehung des Förderrads 52.1 in Förderrichtung weiter vorwärts, wobei die Mitnehmer 72.1 und 72.2 in dieser Phase ihre senkrechte Stellung für eine bestimmte Zeitdauer bzw. eine bestimmte Wegstrecke der Vorwärtsförderung des Produkts beibehalten. Diese senkrechte Ausrichtung der Mitnehmer 72.1 und 72.2 wird durch die Kurvenbahn 58.1 des Förderrads 52.1 gesteuert, mit der die Mitnehmer 72 gekoppelt sind, wie es oben beschrieben wurde.

In der in Fig. 2a gezeigten Stellung liegt das im Produktstau vorderste Produkt "1" mit seiner Vorderseite an den Mitnehmerfingern 72.1 des Förderrads 52.1 an. Das nachfolgende Produkt "2" liegt an dem Produkt "1" an. Die Mitnehmerfinger 72.2 greifen in den Freiraum zwischen den Produkten "1" und "2" ein, wobei sie zunächst keines der Produkte berühren. Wie aus der Darstellung der Fig. 2a ersichtlich ist, liegt das Produkt "1" zwar bereits auf dem Abgabeband 30. Es wird hier jedoch noch von den Mitnehmern 72.1 zurückgehalten, so dass es sich noch nicht mit der Fördergeschwindigkeit des Abgabebands 30 weiter bewegen kann. Das Produkt "1" wird in dieser Phase noch mit der Fördergeschwindigkeit des Produktstaus PS bewegt, d.h. insbesondere der Fördergeschwindigkeit des Zuführbands 10. Da die Fördergeschwindigkeiten des Zuführbands 10 und des Abgabebands 30 im Normalfall unterschiedlich sind, wobei die Fördergeschwindigkeit des Abgabebands 30 insbesondere höher sein kann als die Fördergeschwindigkeit des Zuführbands 10, findet in dieser Phase eine Relativbewegung, d.h. eine Reibung zwischen dem Produkt "1" und dem Abgabeband 30 statt. Vorteilhafter sollten daher Förderbänder mit einem geringen Reibungskoeffizienten verwendet werden.

Fig. 2b zeigt das Förderrad 52.1 in einer um 20° weiter gedrehten Stellung. Die Mitnehmerfinger 72.1 haben sich von dem vordersten Produkt "1" gelöst und dieses somit freigegeben. Das Produkt "1" wird somit nunmehr von dem Abgabeband 30 weiter bewegt und in seiner Bewegungsgeschwindigkeit entsprechend beschleunigt. Das in dem Produktstau PS nunmehr vorderste Produkt "2" legt sich während dessen an die Mitnehmerfinger 72.2 an, wobei es von diesen aber bei dem Übergang von dem Zuführband 10 zu dem Abgabeband 30 noch zurückgehalten und insbesondere noch in dem Produktstau PS gehalten wird. Insbesondere wird das Produkt "2" von den Mitnehmern 72.2 solange zurückgehalten bzw. mit einer langsameren Geschwindigkeit bewegt, bis sein Abstand zu dem vorhergehenden Produkt "1" dem gewünschten Abstand zwischen den vereinzelten, auf dem Abgabeband 30 weiter geförderten Produkten entspricht.

Dieser Zustand ist zu einem entsprechend späteren Zeitpunkt auch noch in Fig. 2c dargestellt, wobei sich das Förderrad 52.1 bereits um weitere 20° weiter gedreht hat. In diesem Zustand liegt das Produkt "2" mit seiner Vorderseite immer noch an den Mitnehmerfingern 72.2 an, während das vorausgehende Produkt "1" bereits freigegeben wurde und sich mit der Geschwindigkeit des Abgabebands 30 weiter bewegt. Gleichzeitig tauchen die nächsten Mitnehmerfinger 72.3 in die seitlichen Freiräume zwischen den Produkten "2" und "3" ein, wobei sie zunächst wiederum im wesentlichen keines der Produkte berühren. Erst bei einer Weiterdrehung des Förderrads 52.1 legen sich die Mitnehmer 72.3 dann wiederum an die Vorderseite des Produkts "3" an und bewegen sich unter Beibehaltung ihrer senkrechten Ausrichtung mit der Weiterdrehung des Förderrads 52.1 wiederum in Förderrichtung weiter.

Mit dieser sich zyklisch wiederholenden Systematik werden die einzelnen Produkte P bei der Übergabe von den Zuführeinrichtungen (Zuführband) 10 an die Abführeinrichtungen (Abgabeband) 30 von den Mitnehmern 72 der Mitnehmereinrichtungen 70 im Zuge der Drehbewegung der Fördereinrichtungen 50 (Förderrad/Förderwalze 52.1) so gehalten und geführt, dass die Produkte P individuell gesteuert aus dem zugeführten Produktstrom PS abgetrennt und vereinzelt und anschließend unter gleichen Abständen voneinander weiter gefördert werden.

Die beschriebene gesteuert verschwenkbare Lagerung der Mitnehmereinrichtungen 70 der Fördereinrichtungen 50 hat unter anderem folgende weitere Vorteile: durch das senkrechte (oder in Grenzen frei wählbare in einem Winkel ausgerichtete) Eintauchen der Mitnehmer 72 in die Zwischenräume zwischen den aufeinander folgenden Produkten P wird das Risiko einer Produktbeschädigung erheblich verringert. In dem Fall, dass die Mitnehmer 72 senkrecht zwischen die aufeinander folgenden Produkte P eintauchen, wird darüber hinaus das erforderliche "Eintauchfenster" reduziert. Dieses ist besonders vorteilhaft bei kleinen Produktdurchmessern, bei größeren Produkttoleranzen sowie bei ungünstigen Höhen-/Durchmesser-Verhältnissen der Produkte.

Aufgrund der verschwenkbaren Lagerung der Mitnehmereinrichtungen 70 kann darüber hinaus die Position oder Ausrichtung des Mitnehmers 72 zu dem Produkt im Winkel frei gewählt werden, wodurch die Charakteristik der Abgabe des Produkts an die nachfolgenden Abführeinrichtungen 30 verändert werden kann. So kann die Abgabecharakteristik der Mitnehmer 72 beispielsweise so eingestellt werden, dass die Produkte P möglichst schnell freigegeben werden oder dass die Produkte P von den Mitnehmern 72 möglichst lange zurückgehalten werden. Durch die Bewegungscharakteristik der Mitnehmer 72 ist außerdem eine kontrollierte Beschleunigung der Produkte bei der Produktfreigabe möglich, wodurch die Geschwindigkeitsdifferenz zwischen dem Produkt P und dem Abgabeband 30 im Zeitpunkt der Freigabe des Produkts minimiert wird und wodurch Fehler in der Positionierung des Produkts P auf dem Abgabeband 30 reduziert werden.

Schließlich wird durch die verschwenkbaren Mitnehmereinrichtungen 70 eine genauere Positionierung und Ausrichtung der Produkte, der Produktreihen und der Produktgruppen auf dem Abgabeband 30 erreicht als bei einer herkömmlichen Übergabe der Produkte von dem Zuführband 10 an das Abgabeband 30 ohne zusätzliche Mitnehmerfördereinrichtungen 50. Wie oben dargestellt wurde, wird dieses dadurch erreicht, dass die Produkte aufgrund der Führung durch die Mitnehmereinrichtungen 70 nicht unkontrolliert auf dem nachfolgenden, in der Regel schneller laufenden Abgabeband 30 positioniert werden und insbesondere von diesem nicht unkontrolliert beschleunigt werden, sondern gezielt und gesteuert auf dem Abgabeband 30 positioniert werden. Bei mehreren nebeneinander angeordneten Bahnen werden die Produkte von den Mitnehmereinrichtungen 70 auf den einzelnen Bahnen dabei insbesondere synchron und miteinander ausgerichtet freigegeben.

Um zu erreichen, dass die Produkte P auf den Abführeinrichtungen 30 unter einem regelmäßigen, gleich bleibenden Abstand voneinander weiter gefördert werden, kommt es wesentlich auf das Zusammenwirken der Zuführeinrichtungen (Zuführ- oder Stauband) 10 und der Abführeinrichtungen (Abgabeband) 30 mit den Fördereinrichtungen 50 (Förderrad oder Förderwalze 52.1) an. Insbesondere müssen die Fördergeschwindigkeiten dieser Komponenten aufeinander abgestimmt und individuell so gesteuert werden, dass einerseits zum richtigen Zeitpunkt immer ein Produkt P aus dem Produktstrom oder Produktstau PS bereitsteht und dass die Mitnehmereinrichtungen 70 der Fördereinrichtungen 50 zu diesem Zeitpunkt exakt zwischen die bereitstehenden Produkte P eingreifen und das in dem Produktstau PS jeweils vorderste Produkt ergreifen und gesteuert so freigeben und an die Abführeinrichtungen 30 übergeben, dass die aufeinander folgenden Produkte P auf den Abführeinrichtungen 30 unter dem gewünschten vorgegebenen, regelmäßigen Abstand voneinander weitergefördert werden.

Um diese Charakteristik zu erreichen, sind Steuerungseinrichtungen vorgesehen, die mit den Zuführeinrichtungen 10, den Abführeinrichtungen 30 und den Fördereinrichtungen 50 in geeigneter Weise zusammenarbeiten, um deren Fördergeschwindigkeiten wie beschrieben individuell zu steuern. Diese Steuerungseinrichtungen umfassen auch geeignete Detektor- und/oder Sensoreinrichtungen, die die Lage der betroffenen Produkte P in der Förderstrecke feststellen, wobei auf der Grundlage dieser ermittelten Informationen dann die jeweiligen Fördergeschwindigkeiten der betroffenen Fördereinrichtungen so gesteuert werden, d.h. beschleunigt oder verzögert oder konstant beibehalten werden, dass die Produkte P jeweils zu einem bestimmten maßgeblichen Zeitpunkt die korrekte Lage, Position und Ausrichtung haben.

Um zu erreichen, dass die Produkte P im Bereich der Fördereinrichtungen 50 (Förderrad 52.1) jeweils die richtige Lage und Position für den Eingriff der Mitnehmereinrichtungen 70 haben, und um dadurch zu verhindern, dass die Produkte P bei einer falschen Positionierung zu einem gegebenen Zeitpunkt durch die eingreifenden Mitnehmereinrichtungen 70 beschädigt werden, ist es insbesondere erforderlich, dass die Produkte P in Förderrichtung vor dem Förderrad 52.1 kontinuierlich und regelmäßig zugeführt werden. Insbesondere sollten die Produkte P in dem über die Zuführeinrichtungen 10 zugeführten Produktstrom PS im Stau aneinander anliegen oder wahlweise in gleichmäßigen Abständen voneinander angeordnet sein. Sollte anderenfalls keine kontinuierliche, regelmäßige Produktzuführung und kein ausreichender Produktstau im Bereich vor dem Förderrad 52.1 vorhanden sein, besteht bei einer unregelmäßigen oder nicht-kontinuierlichen Produktzuführung die genannte Gefahr, dass die Produkte P in einer falschen Art und Weise von den Mitnehmern 72 berührt und damit insbesondere beschädigt werden können. Um dieses zu erreichen, sind Steuerungseinrichtungen derart vorgesehen und ausgelegt, dass die Fördergeschwindigkeiten der Zuführeinrichtungen (Zuführband) 10 und/oder der Fördereinrichtungen 50 (Förderrad 52.1) und/oder ggf. auch der Abführeinrichtungen (Abgabeband) 30 individuell gesteuert und aufeinander abgestimmt oder synchronisiert werden. Die Steuerungseinrichtungen für die beschriebene Beeinflussung der Bewegungscharakteristiken können dabei u.a. einen drehzahlvariablen Antrieb (z.B. mittels eines Servomotors) der Hauptwelle 54.1 des betroffenen Förderrads 52.1 und/oder eine variable Geschwindigkeit der Zuführeinrichtungen (Zuführband) 10 und/oder der Abführeinrichtungen (Abgabeband) 30 umfassen. Die Bewegungscharakteristiken können daneben aber auch durch die jeweilige Gestaltung der Kurvenbahn 58.1 für die Führung der Mitnehmer 72 des Förderrads 52.1 sowie durch eine Verschiebung oder Veränderung der Kurvenbahn 58.1, die gesteuert auch während des Betriebs, d.h. während der Drehung des Förderrads 52.1, möglich ist, beeinflusst werden.

Um zu erreichen, dass die Produkte P vor ihrer Zuführung zu dem Förderrad 52.1 und vor dem jeweiligen Eingriff der Mitnehmer 72 zwischen die aufeinander folgenden Produkte P in dem zugeführten Produktstrom PS im Stau aneinander anliegen oder in einem gleichmäßigen Abstand voneinander angeordnet sind, sind in Ergänzung zu den zuvor beschriebenen Steuerungseinrichtungen bewegliche Stoppereinrichtungen 16 im Bereich des Zuführbands 10 vorgesehen. Solche Stoppereinrichtungen 16 sind beispielsweise in den Fig. 1a und 1b dargestellt. Diese Stoppereinrichtungen 16 dienen dazu und arbeiten ggf. derart mit den genannten Steuerungseinrichtungen zusammen, dass die Stoppereinrichtungen 16 bei Bedarf in die Förderbahn des Zuführbands 10 hinein bewegt werden, wenn nicht eine ausreichende Anzahl einzelner Produkte P über das Zuführband 10 bereitgestellt wird. Die Stoppereinrichtungen 16 halten die zugeführten Produkte P dann in einer definierten Art und Weise zurück und bewirken, dass die Produkte P nunmehr in dem zugeführten Produktstrom PS im Stau aneinander anliegen. In dieser Phase kann unter Umständen eine Reibung bzw. Relativbewegung zwischen den Produkten P und dem Zuführband 10 gegeben sein. Das Förderrad 52.1 läuft in dieser Zeit leer (d.h. ohne Produktförderung) oder wird angehalten.

Sobald eine ausreichende Anzahl von Produkten P im Stau aneinander liegend vorhanden ist, werden die Stoppereinrichtungen 16 wieder aus dem Förderbereich des Zuführbands 10 heraus bewegt, wodurch der Produktstrom PS freigegeben und von dem Zuführband (bzw. Stauband) 10 zu dem Förderrad 52.1 hin weiter gefördert wird, wo die Produkte dann für den Eingriff der Mitnehmer 72 des Förderrads 52.1 zwischen jeweils zwei aufeinander folgende Produkte P bereitstehen und richtig positioniert sind.

In den Fig. 1a und 1b sowie 2a bis 2c sind die Fördereinrichtungen 50 als im wesentlichen kreisförmiges Förderrad oder kreisförmige Förderwalze 52.1 dargestellt, die sich um eine zentrale Drehachse 54.1 drehen, wobei sich die Drehachsen 76 der verschwenkbaren Lagerung der Mitnehmer 72 auf einer Kreisbahn 56.1 um die Drehachse 54.1 herum bewegen. Diese Ausführungsform ist insbesondere auch in den Fig. 3a und 3b dargestellt. Alternativ zu dieser Ausführungsform können die umlaufenden Fördereinrichtungen 50 aber auch aus einem umlaufenden Endlosriemen oder einer umlaufenden Endloskette oder dergleichen gebildet sein, die sich um mindestens zwei parallel zueinander angeordnete Achsen 54.2, 55.2 drehen, also nicht auf einer Kreisbahn umlaufen. Diese Riemen- oder Kettenfördereinrichtungen 52.2 sind beispielhaft in den Fig. 4a und 4b dargestellt, wobei Fig. 4b zur Veranschaulichung ein Detail der Darstellung der Fig. 4a zeigt. Die beiden Drehachsen 54.2 und 55.2 der Riemen- oder Kettenfördereinrichtungen 52.2 sind dabei wiederum senkrecht zu der Förderrichtung der Produkte P und parallel zu der Förderebene der Zuführeinrichtungen 10 und der Abführeinrichtungen 30 angeordnet.

Die Mitnehmereinrichtungen 70 der Riemen- oder Kettenförderer 52.2 der in den Fig. 4a und 4b gezeigten Ausführungsform entsprechen im wesentlichen den Mitnehmereinrichtungen 70 der in den Fig. 3a und 3b gezeigten Ausführungsform, d.h. sie bestehen wiederum aus einem Mitnehmerfinger 72 und einer Mitnehmerwelle oder -achse 76, um die der Mitnehmer 72 in Umfangsrichtung verschwenkbar ist. Bei der Förderbewegung des Riemen- oder Kettenförderers 52.2 läuft die Mitnehmerwelle 76 somit auf einer im wesentlichen oval-förmigen Bahn 56.2 um die beiden Drehachsen 54.2 und 55.2 herum. Der Mitnehmerfinger 72 der Mitnehmereinrichtung 70 ist über einen Hebel 73 wiederum mit einer Mitnehmerrolle 78 verbunden, die in einer Kurvenbahn 58.2 läuft und geführt wird. Die Kurvenbahn 58.2 ist im wesentlichen neben der oval-förmig verlaufenden Führungsbahn 56.2 der Mitnehmerlagerungen 76 angeordnet, wobei ihr Verlauf oder ihre Form aber von einer regelmäßigen Ovalform abweicht. Die Kurvenbahn 58.2 zur Führung der Mitnehmerrollen 78 ist insbesondere wiederum so ausgelegt und geformt, dass die Mitnehmerfinger 72 sich bei einer Drehung des Riemen- oder Kettenförderers 52.2 in die Förderstrecke der Produkte P auf dem Zuführband 10 und dem Abgabeband 30 so hinein bewegen, dass die Mitnehmerfinger 72 wiederum in einer senkrechten Ausrichtung zwischen die aufeinander folgenden Produkte P eintauchen und an den Produkten P wie erforderlich angreifen, um diese über einen bestimmten Abschnitt der Förderstrecke zu halten und zu führen, während die Mitnehmerfinger 72 ihre senkrechte Ausrichtung beibehalten. Sobald die einzelnen Produkte P an das Abgabeband 30 übergeben worden sind und den richtigen, vorgegebenen Abstand zu dem jeweils vorausgehenden Produkt P haben, werden sie wiederum von den Mitnehmerfingern 72 freigegeben, indem die Mitnehmerfinger 72 mittels der in der Kurvenbahn 58.2 geführten Mitnehmerrollen 78 und der Anlenkung über die Hebel 73 aus ihrer senkrechten Stellung hinaus geschwenkt und damit insbesondere aus der Förderstrecke insgesamt hinaus bewegt werden.

In Bezug auf die Schwenkbewegung der Mitnehmereinrichtungen 70 in Relation zu den geförderten Produkten P gilt für den Riemen- bzw. Kettenförderer 52.2 prinzipiell das gleiche, wie es oben in Bezug auf das Förderrad bzw. die Förderwalze 52.1 beschrieben wurde. Je nach Anwendungsfall kann der Riemen- oder Kettenförderer 52.2 gegenüber dem Förderrad 52.1 jedoch insofern vorteilhaft sein, als aufgrund der prinzipiellen Oval-Form der Förderbewegung der Mitnehmer 72 eine längere Wegstrecke realisiert werden kann, über die die Mitnehmer 72 zwischen die aufeinander folgenden Produkte P eingreifen und die Produkte P während der weiteren Bewegung halten und führen und damit gezielt und gesteuert von dem Zuführband 10 an das Abgabeband 30 übergeben (vgl. insbesondere Fig. 4a).

Die erfindungsgemäße Fördervorrichtung wurde bisher im wesentlichen anhand einer einzelnen Förderstrecke oder Förderbahn beschrieben. Wie es oben in Verbindung mit Fig. 1b allerdings bereits angedeutet wurde, kann es für bestimmte Anwendungsfälle wünschenswert sein, mehrere derartige Förderstrecken oder - bahnen nebeneinander und im wesentlichen parallel zueinander anzuordnen, wobei jede dieser mehreren Bahnen für sich genommen prinzipiell so arbeitet, wie es oben beschrieben wurde. Somit sollen die Produkte P auf jeder einzelnen der mehreren Bahnen aus dem jeweiligen Produktstrom PS vereinzelt und anschließend unter gleichen und/oder regelmäßigen Abständen voneinander und/oder in Gruppen angeordnet und weiter gefördert werden. Wesentliches Merkmal einer solchen mehrbahnigen Anordnung ist es dabei, dass die Produkte auf den nebeneinander angeordneten Bahnen in einer vorgegebenen Art und Weise miteinander ausgerichtet werden, um, zum Beispiel quer oder schräg zu der Produktförderrichtung, gerade Reihen oder auf einer regelmäßigen Kurvenbahn verlaufende Reihen entsprechend nebeneinander angeordneter Produkte P zu bilden. Auf diese Weise können beliebige Muster von Produktgruppen oder "Produktteppichen" oder "Produktmatrizen" erzeugt werden, wobei derartige Produktmuster oder Produktgruppen, soweit gewünscht und erforderlich, auch Lücken oder Leerstellen haben können.

Um derartige Produktmuster oder Produktgruppen zu bilden, sind Steuerungseinrichtungen vorgesehen, die die einzelnen Fördervorrichtungen in den nebeneinander angeordneten Bahnen so steuern, dass die einzelnen Produktströme PS auf den mehreren Bahnen miteinander derart synchronisiert werden, dass jeweils ein Produkt P auf einer Bahn nach der Vereinzelung aus dem jeweiligen Produktstrom PS im wesentlichen mit den jeweiligen Produkten P auf einzelnen ausgewählten oder allen der weiteren Bahnen so ausgerichtet ist, dass die Produkte P auf den betroffenen Bahnen wie gewünscht auf einer geraden oder regelmäßig kurvenförmigen Linie im wesentlichen in einer Reihe nebeneinander angeordnet sind. Die Steuerungseinrichtungen für die einzelnen Fördervorrichtungen in den nebeneinander liegenden Bahnen sind dabei im wesentlichen genau so ausgeführt, wie es oben in Bezug auf die Steuerungseinrichtungen der einbahnigen Ausführungsform erläutert wurde, bei der die Steuerungseinrichtungen mit den Zuführeinrichtungen 10, den Abführeinrichtungen 30 und den Fördereinrichtungen 50 zusammenarbeiten und deren Fördergeschwindigkeiten individuell derart steuern, dass die Produkte P nach ihrer Vereinzelung aus dem Produktstrom PS gleichmäßig beabstandet und wahlweise in regelmäßigen Gruppen PG weiter gefördert werden können.

Bei der mehrbahnigen Ausführung der Fördervorrichtung ist prinzipiell zu unterscheiden zwischen einer Ausführungsform, bei der die Antriebe der umlaufenden Mitnehmerfördereinrichtungen 50 (z.B. Förderrad 52.1 oder Riemenförderer 52.2) in jeder der Bahnen miteinander gekoppelt sind, und einer Ausführungsform, bei der die umlaufenden Mitnehmerfördereinrichtungen 50 in jeder der Bahnen jeweils einen eigenen Antrieb haben, der nicht mit den Antrieben der anderen umlaufenden Mitnehmerfördereinrichtungen gekoppelt ist. In dem zuerst genannten Fall der miteinander gekoppelten Antriebe müssen die zuvor genannten Steuerungseinrichtungen zum Steuern der einzelnen Fördervorrichtungen und zum Synchronisieren der einzelnen Produktströme in den mehreren nebeneinander liegenden Bahnen mit den Zuführeinrichtungen 10 und den Abführeinrichtungen 30 in jeder der Bahnen so zusammenarbeiten und deren Fördergeschwindigkeiten individuell derart steuern, dass die Produkte P in jeder der mehreren Bahnen nach ihrer Vereinzelung aus dem jeweiligen Produktstrom PS unter gleichmäßigen Abständen voneinander und wahlweise in regelmäßigen Gruppen weiter gefördert werden.

In dem zweiten zuvor genannten Fall, in dem die umlaufenden Mitnehmerfördereinrichtungen in jeder der Bahnen jeweils einen eigenen Antrieb haben, der nicht mit den Antrieben der anderen Mitnehmerfördereinrichtungen gekoppelt ist, müssen die Steuerungseinrichtungen zum Steuern der Fördervorrichtungen und zum Synchronisieren der einzelnen Produktströme in den mehreren Bahnen sowohl mit den Zuführeinrichtungen 10 und den Abführeinrichtungen 30 als auch mit den umlaufenden Mitnehmerfördereinrichtungen 50 in jeder der Bahnen so zusammenarbeiten und deren Fördergeschwindigkeiten individuell derart steuern, dass die Produkte P in jeder der Bahnen nach ihrer Vereinzelung aus dem jeweiligen Produktstrom PS wiederum unter gleichmäßigen Abständen voneinander und wahlweise in regelmäßigen Gruppen PG weiter gefördert werden.

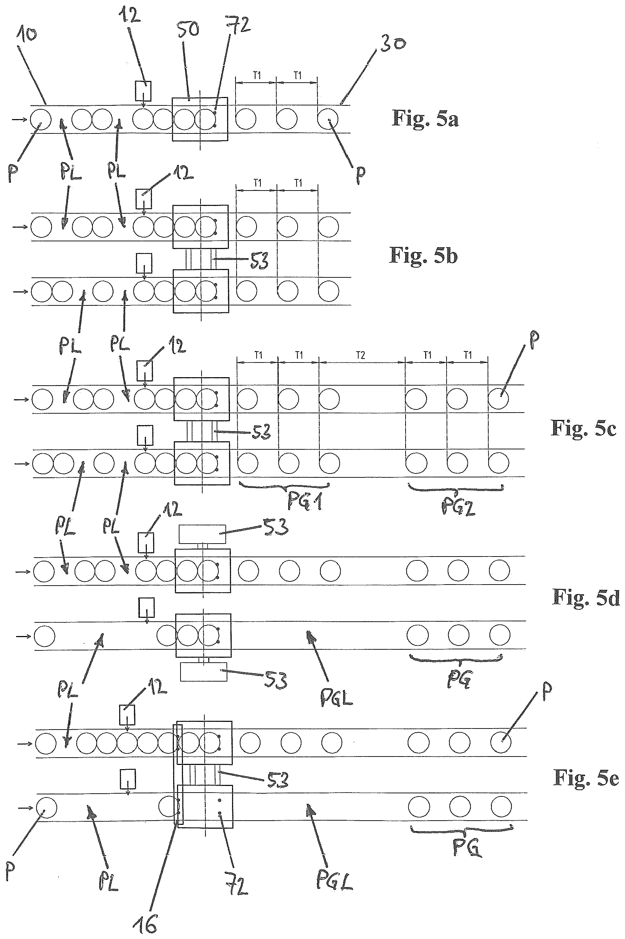

Die Fig. 5b bis 5e zeigen verschiedene Ausführungsformen der Förderung von Produkten P auf mehreren nebeneinander angeordneten Bahnen. Die nachfolgend anhand von zwei nebeneinander angeordneten Bahnen erläuterten Prinzipien gelten in entsprechender Weise auch für Vorrichtungen, bei denen mehr als zwei Bahnen nebeneinander angeordnet sind. Fig. 5a zeigt zunächst zum Vergleich nochmals eine einbahnige Ausführungsform, für die das oben in Verbindung mit den Fig. 1 bis 4 Gesagte entsprechend gilt. In den Darstellungen der Fig. 5a bis 5e sind die wesentlichen Komponenten schematisch dargestellt, so u.a. die Mitnehmerfördereinrichtungen 50 (Förderrad oder -walze bzw. Riemen- oder Kettenförderer) sowie die an dem in dem zugeführten Produktstrom PS jeweils vordersten Produkt P angreifenden Mitnehmer 72. Im Bereich der Zuführeinrichtungen 10 ist in Förderrichtung vor den Mitnehmerfördereinrichtungen 50 eine Detektor- oder Sensoreinrichtung 12 (z.B. in Form einer Kamera) dargestellt, durch die ermittelt wird, ob in dem zugeführten Produktstrom PS vor den Mitnehmerfördereinrichtungen 50 jeweils ein Produkt P vorhanden ist oder nicht, d.h. ob ein ausreichender Produktstau vorhanden ist. Die so ermittelten Informationen werden den Steuerungseinrichtungen zugeführt, die die Bewegungsgeschwindigkeiten der einzelnen Förderer steuern, wie es oben erläutert wurde. Wie aus Fig. 5a schließlich auch erkennbar ist, werden die mittels der Mitnehmerfördereinrichtungen 50 aus dem Produktstrom PS vereinzelten Produkte P auf den Abführeinrichtungen 30 dann unter gleichen Abständen T1 zueinander weiter gefördert.

Fig. 5b zeigt eine zweibahnige Anordnung, wobei jede der Bahnen für sich genommen der in Fig. 5a gezeigten Bahn entspricht. Auf beiden Bahnen werden die Produkte P auf den jeweiligen Zuführbändern 10 dabei lückenhaft zugeführt (Produktlücke oder - fehlstelle PL), d.h. die Produkte liegen vor den Fördereinrichtungen 50 nicht vollständig im Stau aneinander. Diese Situation wird durch die Detektoreinrichtungen 12 erfasst, so dass die Steuerungseinrichtungen die Fördergeschwindigkeiten der betroffenen Fördereinrichtungen so steuern, dass zunächst ein vollständiger Produktstau erzeugt wird. Zu diesem Zweck kann beispielsweise die Fördereinrichtung (Förderrad) 50 angehalten werden, so dass die in Förderrichtung vordersten Mitnehmer 72 die über das Zuführband 10 zugeführten Produkte aufhalten, wodurch die Produkte in dem zugeführten Produktstrom PS zu einem lückenlosen Produktstau aufgefüllt werden. Die Antriebe der beiden Fördereinrichtungen 50 auf den einzelnen Bahnen sind bei der Ausführungsform der Fig. 5b miteinander gekoppelt, d.h. die Förderräder der einzelnen Bahnen haben einen festen, gemeinsamen Antrieb, so dass sie mit der gleichen Geschwindigkeit laufen und die gleiche Bewegungscharakteristik haben (z.B. Beschleunigung, Stillstand, etc.).

Die Fig. 5c entspricht der Fig. 5b, wobei in der Ausführungsform der Fig. 5c aber nicht alle aus dem Produktstrom vereinzelten Produkte P auf der Abführeinrichtung 30 mit dem gleichen Abstand T1 weitergefördert werden. Vielmehr werden hier Produktgruppen PG1, PG2 gebildet, wobei die Produkte innerhalb einer Gruppe und vorzugsweise in jeder der Gruppen PG1 und PG2 in Förderrichtung gleiche Abstände T1 zueinander haben, während die einzelnen Gruppen PG1, PG2 zueinander in Förderrichtung einen anderen Abstand haben, in Fig. 5c insbesondere einen Abstand T2, der größer ist als der Abstand T1 der einzelnen Produkte innerhalb der Gruppen PG1, PG2 zueinander. Die unterschiedlichen Abstände T1, T2 und damit die Produktgruppen PG1, PG2 werden mittels der oben beschriebenen Steuerungseinrichtungen und mittels dadurch bewirkter unterschiedlicher Fördergeschwindigkeiten der einzelnen Fördereinrichtungen (insbesondere Förderrad 52.1 und/oder Abgabeband 30) erzeugt.

Fig. 5d zeigt eine der Fig. 5c ähnliche Ausführungsform zur Bildung einzelner Produktgruppen PG auf den Abführeinrichtungen (Abgabeband) 30. Anders als bei der Ausführungsform der Fig. 5c sind bei der Ausführungsform der Fig. 5d nun jedoch die Antriebe der Fördereinrichtungen 50 (z.B. Förderrad 52.1) nicht miteinander gekoppelt, d.h. die Fördereinrichtungen 50 haben jeweils einen eigenen Antrieb 53. Wie eingangs schon erläutert wurde, sind die Antriebe 53 insbesondere durch Servomotoren gebildet, die flexibel und individuell gesteuert werden können.

In der Ausführungsform der Fig. 5d ist der auf dem Zuführband 10 zugeführte Produktstrom zunächst wiederum unvollständig, d.h. die Produkte liegen vor den Fördereinrichtungen 50 nicht in einem vollständigen Stau aneinander. Der erforderliche Produktstau kann wiederum dadurch gebildet werden, dass beispielsweise die Fördereinrichtungen 50 mit den Mitnehmern 72 zeitweise langsamer laufen oder stillstehen, oder dass das Zuführband 10 zeitweise beschleunigt wird und schneller läuft, damit mehr Produkte pro Zeiteinheit in den Bereich vor den Fördereinrichtungen 50 zugeführt werden, damit die Produkte P dann im Bereich der Fördereinrichtungen 50 für den Eingriff der Mitnehmer 72 letztlich wiederum im Stau aneinander liegen. Aufgrund der getrennten Antriebe 53 der einzelnen Fördereinrichtungen 50 in jeder der Bahnen erfolgt die Steuerung zur Bildung des Produktstaus dabei für jede Bahn individuell.

Wie Fig. 5d des weiteren zeigt, werden zwar einheitliche Produktgruppen PG auf den Abgabebändern 30 gebildet. Dabei können aber einzelne Produktgruppen auf einzelnen der Bahnen fehlen, d.h. es entstehen Lücken PGL in der Größe einzelner Produktgruppen PG auf den Abgabebändern 30 (vgl. Fig. 5d, untere Förderbahn). Zur gezielten Bildung dieser Produktgruppenlücken PGL werden die einzelnen Produkte P im Bereich der Fördereinrichtungen 50 von den Mitnehmern 72 wiederum aufgehalten, und/oder das betreffende Abgabeband 30, auf dem die Produktgruppenlücke PGL gebildet werden soll, läuft für einen bestimmten Zeitabschnitt mit einer höheren Geschwindigkeit. Grundsätzlich kommt es für die Bildung der Produktgruppen sowie der Abstände zwischen den einzelnen Produktgruppen und der Abstände der einzelnen Produkte innerhalb der Produktgruppen sowie für die Bildung eventueller Produktgruppenlücken immer auf das Zusammenwirken der jeweiligen Fördergeschwindigkeiten der drei wesentlichen Förderkomponenten an, nämlich der Zuführeinrichtungen (Zuführband) 10, der Abführeinrichtungen (Abgabeband) 30 sowie der Mitnehmerfördereinrichtungen (Förderrad oder Riemenförderer) 50.

Fig. 5e zeigt schließlich noch eine weitere Ausführungsform ähnlich der Ausführungsform der Fig. 5d. Hierbei ist einerseits wiederum das Zuführband 10 nicht vollständig mit Produkten gefüllt, so dass die Produkte vor dem Förderrad 50 zunächst nicht im Stau aneinander liegen. Außerdem wird auf dem Abgabeband 30 der in Fig. 5e unteren Förderbahn wiederum eine Produktgruppenlücke PGL gebildet, wobei die Produktgruppen PG im übrigen aber jeweils vollständig ausgebildet sind. Anders als bei der Ausführungsform der Fig. 5d, aber entsprechend den Ausführungsformen der Fig. 5b und 5c, sind bei der Ausführungsform der Fig. 5e die Antriebe der Fördereinrichtungen (Förderräder) 50 in den einzelnen Bahnen wiederum miteinander gekoppelt bzw. werden die einzelnen Fördereinrichtungen 50 in den Bahnen über einen gemeinsamen Antrieb bewegt. Erfindungsgemäss, und anders als bei den zuvor beschriebenen Ausführungsformen erfolgt die Staubildung der Produkte im Bereich vor den Fördereinrichtungen 50 hier durch Stoppereinrichtungen 16, beispielsweise eine Stopperleiste, die, wie oben beschrieben wurde, zur Produktstaubildung in die Förderbahn hinein bewegt wird, um die zugeführten Produkte vor den Fördereinrichtungen 50 aufzuhalten. Wenn genügend einzelne Produkte P zu einem Produktstau PS aufgelaufen sind und beispielsweise die Detektoreinrichtungen 12 im Zuführbereich keine Produktlücken PL mehr feststellen, werden die Stoppereinrichtungen (Stopperleiste) 16 wieder aus dem Förderbereich heraus bewegt, wodurch der Produktstrom PS für eine Zufuhr zu den Fördereinrichtungen 50 und einen Eingriff ihrer Mitnehmer 72 zwischen die einzelnen Produkte P freigegeben wird.

Eine Ausführungsform mit Stoppereinrichtungen entsprechend der Fig. 5e ist eine kostengünstige Alternative zu der Produktstaubildung mittels individueller Steuerung der betroffenen Förderkomponenten, wie es oben in Verbindung mit den Fig. 5b bis 5d beschrieben wurde. Die Ausführungsform mit den Stoppereinrichtungen empfiehlt sich somit insbesondere bei Fördervorrichtungen, bei denen ein erhöhtes Risiko besteht, dass einzelne Bahnen im Bereich der Produktzuführung zeitweise unterfüllt sind, d.h., dass in diesen Bereichen zeitweise kein oder kein ausreichender Produktstau gegeben ist.

Wie sich aus den Fig. 5b bis 5e ergibt, können mehrbahnige Fördervorrichtungen realisiert werden, deren Fördereinrichtungen (Förderräder) über einen gemeinsamen Antrieb gekoppelt sind oder deren Fördereinrichtungen voneinander getrennte Antriebe haben. Die dargestellten Ausführungsformen eignen sich insbesondere für solche Anwendungsfälle, bei denen beispielsweise das Risiko besteht, dass einzelne Bahnen im Bereich der Produktzuführung nicht ausreichend mit Produkten gefüllt sind, so dass die Produkte nicht im Produktstau zu den Mitnehmerfördereinrichtungen zugeführt werden, oder für Fälle, in denen die Abgabe der Produkte auf die Abführeinrichtungen zur Bildung gleicher Abstände und/oder regelmäßiger Produktgruppen gesteuert werden soll. Wie oben dargestellt wurde, werden dazu die Fördergeschwindigkeiten der einzelnen Bahnen und/oder der jeweiligen Förderorgane gesteuert und aufeinander abgestimmt und im Extremfall auf Null gebracht, wobei die einzelnen Produkte zeitlich und bezüglich ihrer Position versetzt abgegeben werden können.

Daneben ist es denkbar, mehrbahnige Fördervorrichtungen zu schaffen, bei denen die Fördereinrichtungen (Förderräder oder Riemenförderer) 50 nicht nebeneinander sondern in Förderrichtung versetzt zueinander angeordnet sind. Dabei können die Antriebe der Fördereinrichtungen wiederum wahlweise miteinander gekoppelt sein oder entkoppelt als individuelle Antriebe für jede Fördereinrichtung in jeder der mehreren Bahnen ausgeführt sein. Wenn in diesem Fall die Fördereinrichtungen 50 beispielsweise so versetzt zueinander angeordnet sind, dass abwechselnd eine Fördereinrichtung in einer Bahn in Förderrichtung weiter vorne und die daneben liegende nächste Fördereinrichtung in der nächsten Bahn in Förderrichtung weiter hinten angeordnet ist, können alle vorderen Fördereinrichtungen (Förderräder) über eine Hauptwelle mit einem gemeinsamen Antrieb bewegt werden, während in entsprechender Weise alle hinteren Fördereinrichtungen über eine zweite Hauptwelle mit einem zweiten gemeinsamen Antrieb bewegt werden können.

Mit den oben beschriebenen Ausführungsformen der gesamten Fördervorrichtung sind somit quasi beliebige Produktgruppen oder "Produktteppiche" oder "Produktmatrizen" herstellbar, da die jeweilige Position eines einzelnen Produkts sowohl bahnweise als auch reihenweise (d.h. quer zu den Bahnen) genau gewählt und angesteuert werden kann und die einzelnen Produkte damit entsprechend dem zu erzeugenden Muster exakt miteinander ausgerichtet werden können. Die Ausrichtung der Produkte miteinander und damit die Produktgruppenbildung kann dabei auch zeitabhängig flexibel, d.h. über die Zeit veränderlich realisiert werden.

### Bezugszeichenliste

- P: stückiges Produkt
- PS: Produktstrom, Produktstau
- PG: Produktgruppe
- PL: Produktlücke, -fehlstelle
- PGL: Produktgruppenlücke
- T1: Abstand zwischen zwei Produkten
- T2: Abstand zwischen zwei Produktgruppen

- 10: Zuführeinrichtungen, Zuführband, Stauband
- 12: Detektor, Sensor
- 14: Seitenführung
- 16: Stoppereinrichtung

- 30: Abführeinrichtungen, Abgabeband

- 50: (Mitnehmer-)Fördereinrichtungen

- 52.1: Rad-, Walzenfördereinrichtungen, Förderrad, Förder-walze
- 53: Antrieb, Servomotor
- 54.1: Drehachse, Hauptwelle
- 56.1: Kreisbahn für Mitnehmerlagerung
- 58.1: Kurvenbahn für Mitnehmerführung

- 52.2: Riemen-, Kettenfördereinrichtungen, Riemen-, Kettenförderer
- 54.2: erste Drehachse
- 55.2: zweite Drehachse
- 56.2: Ovalbahn für Mitnehmerlagerung
- 58.2: Kurvenbahn für Mitnehmerführung

- 70: Mitnehmereinrichtungen
- 72: Mitnehmer, Mitnehmerfinger
- 72.1-72.6: Mitnehmer, Mitnehmerfinger
- 73: Hebel
- 76: Mitnehmerlagerung, -welle, -drehachse
- 78: Mitnehmerrolle für Kurvenbahn

## Patentansprüche

1. Vorrichtung zum Fördern von stückigen Produkten (P) derart, dass die Produkte (P) aus einem Produktstrom (PS) vereinzelt und anschließend gleichmäßig beabstandet und/oder in Gruppen (PG) weiter gefördert werden, umfassend folgende Merkmale:
- Einrichtungen (10) zum Zuführen der Produkte (P) als einreihiger Produktstrom (PS);
- Einrichtungen (30) zum Abführen der vereinzelten, voneinander beabstandeten Produkte (P) in einer Reihe, wobei die Abführeinrichtungen (30) in Förderrichtung der Produkte (P) unmittelbar derart hinter den Zuführeinrichtungen (10) angeordnet sind, dass die Produkte (P) von den Zuführeinrichtungen (10) direkt an die Abführeinrichtungen (30) übergeben werden;
- Einrichtungen (50) zum Fördern der Produkte (P), wobei die Fördereinrichtungen (50) im Bereich des Übergangs von den Zuführeinrichtungen (10) zu den Abführeinrichtungen (30) angeordnet sind, und wobei die Fördereinrichtungen (50) Mitnehmereinrichtungen (70) aufweisen, die in Förderrichtung der Produkte (P) gesteuert verschwenkbar gelagert sind und die zwischen zwei in dem zugeführten Produktstrom (PS) aufeinander folgende Produkte (P) derart eingreifen, dass sie bei einer weiteren Bewegung der Fördereinrichtungen (50) die Produkte (P) bei der Übergabe von den Zuführeinrichtungen (10) an die Abführeinrichtungen (30) derart führen, dass die Produkte (P) gesteuert aus dem zugeführten Produktstrom (PS) vereinzelt und unter gleichmäßigen Abständen voneinander und/oder in Gruppen (PG) weiter gefördert und abgeführt werden;
und
- verbundene Steuerungseinrichtungen, die mit den Zuführeinrichtungen (10), den Abführeinrichtungen (30) und den Mitnehmerfördereinrichtungen (50) zusammenarbeiten und deren Fördergeschwindigkeiten individuell derart steuern und aufeinander abstimmen, dass die Produkte (P) nach ihrer Vereinzelung aus dem Produktstrom (PS) gleichmäßig beabstandet und/oder wahlweise in regelmäßigen Gruppen (PG) weiter gefördert werden; **gekennzeichnet durch**
- bewegliche Stoppereinrichtungen (16) für die Produkte (P), wobei die Stoppereinrichtungen (16) derart mit den Steuerungseinrichtungen zusammenarbeiten, dass die Stoppereinrichtungen (16) bei Bedarf in den Förderbereich der Zuführeinrichtungen (10) hinein bewegt werden, um zu bewirken, dass die Produkte (P) in dem zugeführten Produktstrom (PS) im Stau aneinander anliegen, und dass die Stoppereinrichtungen (16) anschließend aus dem Förderbereich der Zuführeinrichtungen (10) heraus bewegt werden, um zu bewirken, dass der Produktstrom (PS) weiter gefördert wird und für den Eingriff der Mitnehmereinrichtungen (70) der Mitnehmerfördereinrichtungen (50) zwischen zwei aufeinander folgende Produkte (P) freigegeben wird.

2. Vorrichtung nach Anspruch 1, **dadurch gekennzeichnet, dass** die Steuerungseinrichtungen die Fördergeschwindigkeiten der Zuführeinrichtungen (10) und/oder der Mitnehmerfördereinrichtungen (50) individuell derart steuern, dass die Produkte (P) in dem zugeführten Produktstrom (PS) im Stau aneinander anliegen oder in einem gleichmäßigen Abstand voneinander angeordnet sind, bevor die Mitnehmereinrichtungen (70) der Mitnehmerfördereinrichtungen (50) zwischen zwei aufeinander folgende Produkte (P) eingreifen.

3. Vorrichtung nach einem der Ansprüche 1 oder 2, **dadurch gekennzeichnet, dass** die Einrichtungen (50) zum Fördern der Produkte (P) umlaufende Fördereinrichtungen (52.1, 52.2) sind, wobei mehrere Mitnehmereinrichtungen (70) unter regelmäßigen Abständen voneinander an dem Umfang der Fördereinrichtungen (52.1, 52.2) angeordnet sind und sich von diesen im wesentlichen nach außen erstrecken, und wobei die Mitnehmereinrichtungen (70) mittels einer Kurvenbahn (58.1, 58.2) und in diese eingreifenden Hebeln (73) in der Richtung des Umfangs der Fördereinrichtungen (52.1, 52.2) gesteuert verschwenkbar gelagert sind.

4. Vorrichtung nach Anspruch 3, **dadurch gekennzeichnet, dass** die umlaufenden Fördereinrichtungen rad- oder walzenartige Fördereinrichtungen (52.1) sind, die sich um eine Achse (54.1) drehen, die senkrecht zu der Förderrichtung der Produkte (P) und parallel zu der Förderebene der Zuführeinrichtungen (10) und der Abführeinrichtungen (30) angeordnet ist.

5. Vorrichtung nach Anspruch 3, **dadurch gekennzeichnet, dass** die umlaufenden Fördereinrichtungen Riemen- oder Kettenfördereinrichtungen (52.2) sind, die sich um mindestens zwei parallel zueinander angeordnete Achsen (54.2, 55.2) drehen, die senkrecht zu der Förderrichtung der Produkte (P) und parallel zu der Förderebene der Zuführeinrichtungen (10) und der Abführeinrichtungen (30) angeordnet sind.

6. Vorrichtung nach einem der vorhergehenden Ansprüche, **dadurch gekennzeichnet, dass** die Zuführeinrichtungen (10) und die Abführeinrichtungen (30) umlaufende Band- oder Riemen- oder Kettenfördereinrichtungen sind, die derart hintereinander angeordnet sind, dass die Produkte (P) im wesentlichen in einer Ebene von den Zuführeinrichtungen (10) an die Abführeinrichtungen (30) übergeben werden.

7. Vorrichtung zum Fördern von stückigen Produkten (P) auf mehreren nebeneinander und im wesentlichen parallel zueinander angeordneten Bahnen, wobei die Produkte (P) auf jeder der Bahnen aus einem Produktstrom (PS) vereinzelt und anschließend gleichmäßig beabstandet und/oder in Gruppen (PG) weiter gefördert werden, umfassend folgende Merkmale:
- in jeder der Bahnen ist eine Vorrichtung zum Fördern von stückigen Produkten (P) gemäß einem der Ansprüche 1 bis 6 angeordnet; und
- Einrichtungen zum Steuern der Fördervorrichtungen in den mehreren Bahnen so, dass die einzelnen Produktströme (PS) auf den mehreren Bahnen miteinander derart synchronisiert werden, dass jeweils ein Produkt (P) auf einer Bahn nach der Vereinzelung aus dem jeweiligen Produktstrom (PS) im wesentlichen mit den jeweiligen Produkten (P) auf einzelnen ausgewählten oder allen der anderen Bahnen so ausgerichtet ist, dass die Produkte (P) auf den betroffenen Bahnen in einer Richtung senkrecht oder schräg zu der Förderrichtung der Produkte (P) im wesentlichen in einer Reihe nebeneinander angeordnet sind.

8. Vorrichtung nach Anspruch 7, **dadurch gekennzeichnet, dass** die Antriebe (53) der umlaufenden Mitnehmerfördereinrichtungen (50) für die Produkte (P) in jeder der Bahnen miteinander gekoppelt sind, und dass die Einrichtungen zum Steuern der Fördervorrichtungen in den mehreren Bahnen mit den Zuführeinrichtungen (10) und den Abführeinrichtungen (30) in jeder der Bahnen zusammenarbeiten und deren Fördergeschwindigkeiten individuell derart steuern, dass die Produkte (P) in jeder der Bahnen nach ihrer Vereinzelung aus dem jeweiligen Produktstrom (PS) unter gleichmäßigen Abständen voneinander und/oder wahlweise in regelmäßigen Gruppen (PG) weiter gefördert werden.

9. Vorrichtung nach Anspruch 7, **dadurch gekennzeichnet, dass** die umlaufenden Mitnehmerfördereinrichtungen (50) für die Produkte (P) in jeder der Bahnen jeweils einen eigenen Antrieb (53) haben, der nicht mit den Antrieben (53) der anderen umlaufenden Mitnehmerfördereinrichtungen (50) gekoppelt ist, und dass die Einrichtungen zum Steuern der Fördervorrichtungen in den mehreren Bahnen mit den Zuführeinrichtungen (10), den Abführeinrichtungen (30) und den umlaufenden Mitnehmerfördereinrichtungen (50) in jeder der Bahnen zusammenarbeiten und deren Fördergeschwindigkeiten individuell derart steuern, dass die Produkte (P) in jeder der Bahnen nach ihrer Vereinzelung aus dem jeweiligen Produktstrom (PS) unter gleichmäßigen Abständen voneinander und/oder wahlweise in regelmäßigen Gruppen (PG) weiter gefördert werden.

10. Verfahren zum Fördern von stückigen Produkten (P) derart, dass die Produkte (P) aus einem Produktstrom (PS) vereinzelt und anschließend gleichmäßig beabstandet und/oder in Gruppen (PG) weiter gefördert werden, wobei es unter Verwendung einer Vorrichtung nach einem der Ansprüche 1 bis 6 durchgeführt wird.

11. Verfahren zum Fördern von stückigen Produkten (P) auf mehreren nebeneinander und im wesentlichen parallel zueinander angeordneten Bahnen, wobei die Produkte (P) auf jeder der Bahnen aus einem Produktstrom (PS) vereinzelt und anschließend gleichmäßig beabstandet und/oder in Gruppen (PG) weiter gefördert werden, wobei es unter Verwendung einer Vorrichtung nach einem der Ansprüche 7 bis 9 durchgeführt wird.

12. Verfahren nach Anspruch 11, **dadurch gekennzeichnet, dass** die Produkte (P) nach der Vereinzelung aus den Produktströmen (PS) in Gruppen (PG) weiter gefördert werden, wobei eine Gruppe (PG) mehrere, auf einzelnen ausgewählten oder allen Bahnen in Förderrichtung unter gleichen Abständen (T1) voneinander und in einer Richtung senkrecht oder schräg zu der Förderrichtung auf den betroffenen Bahnen im wesentlichen in einer Reihe nebeneinander angeordnete Produkte (P) umfasst, und wobei die einzelnen Gruppen (PG) in Förderrichtung unter gleichen Abständen (T2) voneinander angeordnet sind, wobei sich die Abstände (T2) zwischen den einzelnen Gruppen von den Abständen (T1) zwischen den einzelnen Produkten (P) innerhalb einer Gruppe (PG) unterscheiden.

## Claims

1. A device for conveying lumpy products (P) in such a way that the products (P) are separated from a product stream (PS) and are subsequently conveyed further spaced apart uniformly and/or in groups (PG), comprising the following features:
- arrangements (10) for supplying the products (P) as a single-row product stream (PS);
- arrangements (30) for discharging the separated products (P) spaced apart from one another in a row, wherein the discharging arrangements (30) are arranged immediately after the supplying arrangements (10) in the conveying direction of the products (P) in such a way that the products (P) are transferred from the supplying arrangements (10) directly to the discharging arrangements (30);
- arrangements (50) for conveying the products (P), wherein the conveying arrangements (50) are arranged in the area of the transfer from the supplying arrangements (10) to the discharging arrangements (30), and wherein the conveying arrangements (50) have driver arrangements (70), which are mounted so as to be pivotable in a controlled manner in the conveying direction of the products (P) and which intervene between two successive products (P) in the supplied product stream (PS) in such a way that, with a further movement of the conveying arrangements (50), said driver arrangements guide the products (P) during the transfer from the supplying arrangements (10) to the discharging arrangements (30) in such a way that the products (P) are separated from the supplied product stream (PS) and are conveyed further at uniform distances from one another and/or in groups (PG), and are discharged, in a controlled manner in each case; and
- joint control arrangements, which cooperate with the supplying arrangements (10), the discharging arrangements (30) and the driver conveying arrangements (50) and control and match the conveying speeds thereof individually in such a way that the products (P), following separation thereof from the product stream (PS), are conveyed further spaced apart uniformly and/or selectively in regular groups (PG);
**characterized by**
- movable stopper arrangements (16) for the products (P), wherein the stopper arrangements (16) cooperate with the control arrangements in such a way that the stopper arrangements (16) as necessary are moved into the conveying area of the supplying arrangements (10) in order to cause the products (P) in the supplied product stream (PS) to contact one another in the accumulation, and in such a way that the stopper arrangements (16) are subsequently moved out from the conveying area of the supplying arrangements (10) in order to cause the product stream (PS) to be conveyed further and to be released for the intervention of the driver arrangements (70) of the driver conveying arrangements (50) between two successive products (P).

2. The device as claimed in claim 1, **characterized in that** the control arrangements control the conveying speeds of the supplying arrangements (10) and/or of the driver conveying arrangements (50) individually in such a way that the products (P) in the supplied product stream (PS) contact one another in the accumulation or are arranged at a uniform distance from one another before the driver arrangements (70) of the driver conveying arrangements (50) intervene between two successive products (P).

3. The device as claimed in one of claims 1 or 2, **characterized in that** the arrangements (50) for conveying the products (P) are circulating conveying arrangements (52.1, 52.2), wherein a plurality of driver arrangements (70) are arranged at regular distances from one another on the periphery of the conveying arrangements (52.1, 52.2) and extend substantially outwardly therefrom, and wherein the driver arrangements (70) are mounted by means of a curved track (58.1, 58.2) and levers (73) engaging therewith so as to be pivotable in a controlled manner in the direction of the periphery of the conveying arrangements (52.1, 52.2).

4. The device as claimed in claim 3, **characterized in that** the circulating conveying arrangements are wheel-like or roller-like conveying arrangements (52.1), which rotate about an axis (54.1), which is arranged perpendicularly to the conveying direction of the products (P) and parallel to the conveying plane of the supplying arrangements (10) and of the discharging arrangements (30).

5. The device as claimed in claim 3, **characterized in that** the circulating conveying arrangements are belt or chain conveying arrangements (52.2), which rotate about at least two axes (54.2, 55.2) arranged parallel to one another, which are arranged perpendicularly to the conveying direction of the products (P) and parallel to the conveying plane of the supplying arrangements (10) and of the discharging arrangements (30).

6. The device as claimed in one of the preceding claims, **characterized in that** the supplying arrangements (10) and the discharging arrangements (30) are circulating band or belt or chain conveying arrangements, which are arranged in succession in such a way that the products (P) are transferred substantially in one plane from the supplying arrangements (10) to the discharging arrangements (30).

7. A device for conveying lumpy products (P) on a plurality of tracks arranged side by side and substantially parallel to one another, wherein the products (P) are separated from a product stream (PS) on each of the tracks and are subsequently conveyed further spaced apart uniformly and/or in groups (PG), comprising the following features:
- a device for conveying lumpy products (P) as claimed in one of claims 1 to 6 is arranged in each of the tracks; and
- arrangements for controlling the conveying devices in the plurality of tracks such that the individual product streams (PS) on the plurality of tracks are synchronized with one another in such a way that a product (P) on a track, following the separation from the respective product stream (PS), is substantially aligned with the respective products (P) on individual selected other tracks or all of the other tracks, such that the products (P) on the tracks in question are arranged side by side substantially in a row in a direction perpendicular or at an incline to the conveying direction of the products (P).

8. The device as claimed in claim 7, **characterized in that** the drives (53) of the circulating driver conveying arrangements (50) for the products (P) in each of the tracks are coupled to one another, and **in that** the arrangements for controlling the conveying devices in the plurality of tracks cooperate with the supplying arrangements (10) and the discharging arrangements (30) in each of the tracks and control the conveying speeds thereof individually in such a way that the products (P) in each of the tracks, following separation thereof from the respective product stream (PS), are conveyed further at uniform distances from one another and/or selectively in regular groups (PG).

9. The device as claimed in claim 7, **characterized in that** the circulating driver conveying arrangements (50) for the products (P) in each of the tracks each have a dedicated drive (53), which is not coupled to the drives (53) of the other circulating driver conveying arrangements (50), and **in that** the arrangements for controlling the conveying devices in the plurality of tracks cooperate with the supplying arrangements (10), the discharging arrangements (30) and the circulating driver conveying arrangements (50) in each of the tracks and control the conveying speeds thereof individually in such a way that the products (P) in each of the tracks, following separation thereof from the respective product stream (PS), are conveyed further at uniform distances from one another and/or selectively in regular groups (PG).

10. A method for conveying lumpy products (P) in such a way that the products (P) are separated from a product stream (PS) and are subsequently conveyed further spaced apart uniformly and/or in groups (PG), wherein said method is carried out with use of a device as claimed in one of claims 1 to 6.

11. A method for conveying lumpy products (P) on a plurality of tracks arranged side by side and substantially parallel to one another, wherein the products (P), on each of the tracks, are separated from a product stream (PS) and are subsequently conveyed further spaced apart uniformly and/or in groups (PG), wherein said method is carried out with use of a device as claimed in one of claims 7 to 9.

12. The method as claimed in claim 11, **characterized in that** the products (P), following the separation from the product streams (PS), are conveyed further in groups (PG), wherein a group (PG) comprises a plurality of products (P) arranged on individual selected tracks or all tracks at identical distances (T1) from one another in the conveying direction and arranged side by side substantially in a row in a direction perpendicular or at an incline to the conveying direction on the tracks in question, and wherein the individual groups (PG) are arranged at identical distances (T2) from one another in the conveying direction, wherein the distances (T2) between the individual groups differ from the distances (T1) between the individual products (P) within a group (PG).

## Revendications

1. Dispositif de convoyage de produits en morceaux (P) de façon à ce que les produits (P) soient séparés d'un flux de produit (PS) et puis convoyés plus loin écartés uniformément et/ou en groupes (PG), présentant les caractéristiques suivantes :
- des dispositifs (10) d'alimentation des produits (P) en tant que flux de produits (PS) sur une rangée;
- des dispositifs (30) pour l'évacuation des produits (P), séparés, écartés les uns des autres, dans une rangée, les dispositifs d'évacuation (30) étant disposés, dans la direction de convoyage des produits (P), directement derrière les dispositifs d'alimentation (10), de façon à ce que les produits (P) soient transférés directement des dispositifs d'alimentation (10) vers les dispositifs d'évacuation (30) ;
- des dispositifs (50) pour le convoyage des produits (P), les dispositifs de convoyage (50) étant disposés au niveau de la transition entre les dispositifs d'alimentation (10) et les dispositifs d'évacuation (30) et les dispositifs de convoyage (50) comprenant des dispositifs à raclettes (70) qui sont logés de manière pivotante et contrôlée dans la direction de convoyage des produits (P) et qui interviennent entre deux produits (P) se succédant dans le flux de produit (PS) introduit de façon à ce que lors d'un mouvement supplémentaire des dispositifs de convoyage (50), ils conduisent les produits (P) lors du transfert des dispositifs d'alimentation (10) vers les dispositifs d'évacuation (30) de façon à ce que les produits (P) soient séparés de manière contrôlée du flux de produits (PS) et convoyés plus loin et évacués de manière écartée entre eux à des intervalles uniformes et/ou en groupes (PG) ; et
- des dispositifs de commande connectés qui interagissent avec les dispositifs d'alimentation (10), les dispositifs d'évacuation (30) et les dispositifs de convoyage à raclettes (50) et qui contrôlent individuellement leurs vitesses de convoyage et les adaptent entre elles de façon à ce que les produits (P) soient convoyés plus loin, après leur séparation du flux de produit (PS), de manière écartée uniformément et/ou au choix dans des groupes réguliers (PG);
**caractérisé par**
- des dispositifs d'arrêt mobiles (16) pour les produits (P), les dispositifs d'arrêt (16) interagissant avec les dispositifs de commande de façon à ce que les dispositifs d'arrêt (16) soient déplacés, si nécessaire, vers la zone de convoyage des dispositifs d'alimentation (10) afin de faire en sorte que les produits (P) s'appuient les uns contre les autres dans le flux de produits (PS) introduit, et en ce que les dispositifs d'arrêt (16) sont ensuite déplacés hors de la zone de convoyage des dispositifs d'alimentation (10), afin de faire en sorte que le flux de produit (PS) soit convoyé plus loin et soit libéré pour l'intervention des dispositifs à raclettes (70) des dispositifs de convoyage à raclettes (50) entre deux produits (P) successifs.

2. Dispositif selon la revendication 1, **caractérisé en ce que** les dispositifs de commande contrôlent individuellement les vitesses de convoyage des dispositifs d'alimentation (10) et/ou des dispositifs de convoyage à raclettes (50) de façon à ce que les produits (P) s'appuient les uns contre les autres dans le flux de produits (PS) introduit ou sont disposés à des intervalles réguliers, avant que les dispositifs à raclettes (70) des dispositifs de convoyage (50) interviennent entre deux produits (P) successifs.

3. Dispositif selon l'une des revendications 1 ou 2, **caractérisé en ce que** les dispositifs (50) pour le convoyage des produits (P) sont des dispositifs de convoyage circulaires (52.1, 52.2), plusieurs dispositifs à raclettes (70) étant disposés à intervalles réguliers sur la circonférence des dispositifs de convoyage (52.1, 52.2) et s'étendant de ceux-ci globalement vers l'extérieur et les dispositifs à raclettes (70) étant logés, au moyen d'une piste courbe (58.1, 58.2) et de leviers (73) s'emboîtant dans celle-ci, de manière pivotante et contrôlée dans la direction de la circonférence des dispositifs de convoyage (52.1, 52.2).

4. Dispositif selon la revendication 3, **caractérisé en ce que** les dispositifs de convoyage circulaires sont des dispositifs de convoyage (52.1) à roues ou à rouleaux, qui tournent autour d'un axe (54.1), qui est disposé perpendiculairement à la direction de convoyage des produits (P) et parallèlement au plan de convoyage des dispositifs d'alimentation (10) et des dispositifs d'évacuation (30).

5. Dispositif selon la revendication 3, **caractérisé en ce que** les dispositifs de convoyage circulaires sont des dispositifs de convoyage (52.2) à courroies ou à chaînes, qui tournent autour d'au moins deux axes parallèles entre eux (54.2, 55.2), qui sont disposés perpendiculairement à la direction de convoyage des produits (P) et parallèlement au plan de convoyage des dispositifs d'alimentation (10) et des dispositifs d'évacuation (30).

6. Dispositif selon l'une des revendications précédentes, **caractérisé en ce que** les dispositifs d'alimentation (10) et les dispositifs d'évacuation (30) sont des dispositifs de convoyage circulaires à bandes, à courroies ou à chaînes, qui sont disposés les uns derrière les autres de façon à ce que les produits (P) soient transférés globalement dans un plan des dispositifs d'alimentation (10) vers les dispositifs d'évacuation (30).

7. Dispositif de convoyage de produits en morceaux (P) sur plusieurs pistes disposées les unes à côtés des autres et globalement parallèlement entre elles, les produits (P) étant séparés d'un flux de produits (PS) sur chacune des pistes et puis convoyés plus loin écartés uniformément et/ou en groupes (PG), présentant les caractéristiques suivantes :
- dans chacune des pistes, se trouve un dispositif de convoyage de produits en morceaux (P) selon l'une des revendications 1 à 6 ; et
- des dispositifs pour la commande des dispositifs de convoyage dans les plusieurs pistes, de façon à ce que les différents flux de produits (PS) soient synchronisés entre eux sur les plusieurs pistes, de façon à ce qu'un produit (P) sur une piste soit aligné, après la séparation du flux de produit (PS), avec les produits (P) sur différentes pistes sélectionnées ou sur toutes les autres pistes, de façon à ce que les produits (P) soient disposés, sur les pistes concernées, dans une direction perpendiculaire ou oblique par rapport à la direction de convoyage des produits (P), globalement dans une rangée les uns à côtés des autres.

8. Dispositif selon la revendication 7, **caractérisé en ce que** les entraînements (53) des dispositifs de convoyage à raclettes (50) circulaires pour les produits (P) sont couplés entre eux dans chacune des pistes et **en ce que** les dispositifs de commande des dispositifs de convoyage interagissent, dans les plusieurs pistes, avec les dispositifs d'alimentation (10) et les dispositifs d'évacuation (30) dans chacune des pistes et contrôlent individuellement leurs vitesses de convoyage, de façon à ce que les produits (P) dans chacune des pistes soient convoyés plus, après leur séparation du flux de produits (PS), à des intervalles réguliers entre eux et/ou au choix en groupes réguliers (PG).

9. Dispositif selon la revendication 7, **caractérisé en ce que** chaque dispositif de convoyage à raclettes circulaire (50) pour les produits (P) dans chacune des pistes comprend chacun son propre entraînement (53), qui n'est pas couplé avec les entraînements (53) des autres dispositifs de convoyage à raclettes circulaires (50) et **en ce que** les dispositifs de commande des dispositifs de convoyage dans plusieurs pistes interagissent avec les dispositifs d'alimentation (10), les dispositifs d'évacuation (30) et les dispositifs de convoyage à raclettes circulaires (50) dans chacune des pistes et contrôlent leurs vitesses de convoyage individuellement de façon à ce que les produits (P) dans chacune des pistes soient convoyés plus loin, après leur séparation du flux de produit (PS), à des intervalles réguliers entre eux et/ou au choix en groupes réguliers (PG).

10. Procédé de convoyage de produits en morceaux (P) de façon à ce que les produits (P) soient séparés d'un flux de produits (PS) et puis soient convoyés plus loin ensuite écartés régulièrement et/ou en groupes (PG), ce procédé étant exécuté à l'aide d'un dispositif selon l'une des revendications 1 à 6.

11. Procédé de convoyage de produits en morceaux (P) sur plusieurs pistes disposées les unes à côté des autres et globalement parallèlement entre elles, les produits (P) sur chacune des pistes étant séparés d'un flux de produits (PS) et puis convoyés plus loin écartés régulièrement et/ou en groupes (PG), ce procédé étant exécuté à l'aide à d'un dispositif selon l'une des revendications 7 à 9.

12. Procédé selon la revendication 11, **caractérisé en ce que** les produits (P) sont convoyés plus loin en groupes (PG) après la séparation des flux de produits (PS), un groupe (PG) comprenant plusieurs produits (P), sur différentes pistes sélectionnées ou sur toutes les pistes, disposés dans la direction de convoyage à des intervalles réguliers (T1) entre eux et perpendiculairement ou obliquement par rapport à la direction de convoyage sur les pistes concernées, globalement les uns à côté des autres, et les différents groupes (PG) étant disposés dans la direction de convoyage à des intervalles réguliers (T2), les distances (T2) entre les différents groupes étant différentes des distances (T1) entre les différents produits (P) à l'intérieur d'un groupe (PG).
